(19) Europäisches Patentamt
European Patent Office
Office européen des brevets

(11) Publication number: **0 610 505 A1**

# (12) EUROPEAN PATENT APPLICATION published in accordance with Art. 158(3) EPC

(21) Application number: **92922473.1**

(22) Date of filing: **27.10.92**

(86) International application number: **PCT/JP92/01390**

(87) International publication number: **WO 93/09217 (13.05.93 93/12)**

(51) Int. Cl.5: **C11D 11/04**, B08B 3/14, B01D 3/34

(30) Priority: **28.10.91 JP 281314/91**

(43) Date of publication of application: **17.08.94 Bulletin 94/33**

(84) Designated Contracting States: **DE FR GB**

(71) Applicant: **KABUSHIKI KAISHA TOSHIBA**
**72, Horikawa-cho**
**Saiwai-ku**
**Kawasaki-shi Kanagawa-ken 210 (JP)**
Applicant: **TOSHIBA SILICONE CO., LTD.**
**2-31, Roppongi 6-chome**
**Minato-ku**
**Tokyo 106 (JP)**

(72) Inventor: **KUMAGAI, Masaru 27-29, Irie**
**1-chome**
**Kanagawa-ku**
**Yokohama-shi Kanagawa 221 (JP)**
Inventor: **SUZUKI, Masayo 22-14-101,**
**Kakinokizaka 2-chome**
**Meguro-ku**
**Tokyo 152 (JP)**
Inventor: **INADA, Minoru 2513-1321, Shiomidai**
**2-chome**
**Isogo-ku**
**Yokohama-shi Kanagawa 235 (JP)**
Inventor: **YAGI, Noriaki 2121-D103, Totsukacho**
**Totsuka-ku**
**Yokohama-shi Kanagawa 244 (JP)**
Inventor: **SHIZU, Hiromi 25-7-208, Kameino**
**1-chome**
**Fujisawa-shi**
**Kanagawa 252 (JP)**
Inventor: **SAITOH, Nobuhiro 908-10, Toriyama**
**Ota-shi**
**Gunma 373 (JP)**
Inventor: **KURITA, Akitsugu 1322-24,**
**Uchigashima**
**Ota-shi**
**Gunma 373 (JP)**
Inventor: **YAMAFUJI, Shigeo 878-12-A-205,**
**Higashitanaka**
**Gotenba-shi**
**Shizuoka 412 (JP)**
Inventor: **TAKAHASHI, Takashi 1416, Nukata**
**Konosu-shi**
**Saitama 365 (JP)**

(74) Representative: **Henkel, Feiler, Hänzel & Partner**
**Möhlstrasse 37**
**D-81675 München (DE)**

## (54) WASH WASTE LIOUID REGENERATING METHOD, WASH WASTE LIOUID REGENERATING APPARATUS, WASHING METHOD AND WASHING APPARATUS.

(57) A method of treating and regenerating a high-load and high-concentration wash waste liquid (50), which is discharged from a washing stage (20) and a rinsing stage, by vacuum distillation. In a washing method and a washing apparatus, a multitank-connected type rinsing tank unit (31) in which a plurality of tanks are connected so that a rinse liquid (32) is sent in order in a direction opposite to the direction in which a material to be washed

EP 0 610 505 A1

is transferred is used. A wash waste liquid (50) discharged from a rinsing tank (31c) positioned at the most downstream side of the multitank-connected type rinsing tank unit (31) is vacuum distilled, and a condensate (54) obtained is recycled to a rinsing tank (31a) positioned at the most upstream side of the tank unit. The vacuum distillation is carried out in the presence of, for example, a silicone defoaming agent (61) or a silicone defoaming component. The vacuum distillation is also carried out as a wash waste liquid is allowed to flow down along a heated wall surface to form a film of the liquid thereon.

Fig. 1

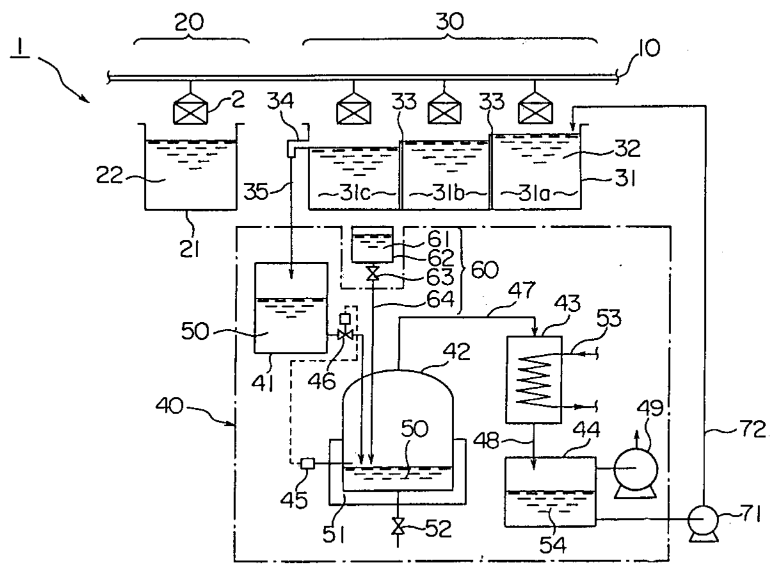

## Technical Field

The present invention relates to a method for regenerating a spent detergent or rinse, an apparatus for regenerating the spent detergent, and a method for cleaning and an apparatus for cleaning by the use of the product of the regeneration.

## Background Art

Metallic parts, plated parts, coated parts, electronic parts, semiconductor parts and various other similar parts, while undergoing the process of manufacture or assemblage, are prone to gather on their surfaces various defiling substances centering on machining oil and dust. It has been heretofore customary for such defiled parts as these to be cleaned with Flon type solvents and chlorine type solvents. The Flon type solvents and chlorine type solvents contain chlorine. Since it has been demonstrated that these chlorine-containing compounds destroy the ozonosphere, however, measures have been adopted to repress or even abolish completely the use of these Flon type solvents and chlorine type solvents. Under the circumstances, the review of the currently prevalent process of cleaning has become an urgent necessity.

The feasibility of using aqueous type detergents such as, for example, aqueous solutions of saponifying agents and surfactants in the place of the aforementioned Flon type solvents and chlorine type solvents is now being studied. Unlike the organic type solvents, the aqueous type detergents have a good prospect of fulfilling various kinds of cleaning because they permit construction of a nonflammable cleaning system and they are enabled to manifest a high degreasing ability by the use of a suitably selected alkali or surfactant. Since they necessitate use of water for rinsing, they inevitably entail the problem of safely disposing of the rinsing, a residue which never occurs in the cleaning as with a solvent.

Incidentally, the activated sludge method, the activated carbon adsorption method, the ion exchange method, the membrane separation method, and various combinations of the methods mentioned above have been heretofore adopted for the disposal of plant effluents. Theme conventional methods of disposal, however, entail the problem of necessitating heavy investment of capital in facilities and complicate maintenance and management of equipment. Further, the aforementioned methods of disposal invariably fail to allow easy direct disposal of so-called high-load plant effluents which manifest BOD, COD, n-hexane extracts, pH, and SS at high levels. In this case, such plant effluents must be diluted with water of a volume more than is normally necessary for rinsing so that they no longer have a high load when they are disposed by the methods under discussion. In addition to the growing difficulty to be encountered in securing a large volume of water for the dilution, the policy to restrict the total volume of plant effluent allowed to be released into the environment prevents the aforementioned methods from being advantageously adopted for the disposal of plant effluents. This fact has posed a serious problem. As described above, the popular methods adopted heretofore for the disposal of plant effluents are incapable of efficiently disposing of high-load rinsing at a low cost.

In the field of other applications such as the disposal of washings emanating from the plating work or concentrated rinsing resulting from the work of rinsing pickled metals and the concentration and disposal of washings arising from the photographic treatment, methods for effecting the disposal by virtue of distillation have been studied and developed (JP-A-50-12,847, JP-A-3-229,688, etc.). When direct application of the process of distillation to the disposal and regeneration of washings resulting from the work of cleaning with a detergent is attempted at all, the distillation entails effervescence and betrays deficiency in capacity for disposal and cannot be practically continued because the washings contains a surfactant and further because the work of cleaning with the detergent is generally performed continuously and particularly the effluent from the step of rinsing is large in volume. For the purpose of effectively applying the process of distillation to continuous disposal of the washings, therefore, it is necessary to decrease the volume of the washings itself and, at the same time, preclude such factors as effervescence which tend to degrade the efficiency of disposal. None of the methods heretofore developed for the disposal and regeneration of the washings are found to fulfill the requirement.

In the electric and electronic industries, the trend of devices toward miniaturization and growing integration has been encouraging exaltation of the packaging density of components in circuit substrates. An attempt to clean these substrates with an aqueous type detergent has a great possibility of entailing such adverse effects as leakage, Ag migration, and insufficient drying of a connector and the vicinity thereof. Studies are now under way concerning the feasibility of using as detergents such organic solvents as alcohols, hydrocarbon type solvents, and silicone type solvents which contain substantially no chlorine and the solvents obtained by adding a surfactant to the same organic solvents as mentioned above.

Though the use of such a solvent type detergent solves the problems attendant on the work of cleaning and the problems on the disposal of washings, it still entails the problems relative to the disposal and regeneration of the solvent in an exhausted state. As the simplest way of treating and regenerating a solvent type detergent, the so-called simple distillation method which consists in thermally condensing a given detergent under an atmospheric pressure may be cited. The act of heating the solvent type detergent having inflammability to the boiling point thereof is extremely dangerous.

Further, when the solvent type detergent is used, since the rinse (solvent type) is consumed in a relatively large amount, it is necessary to have the rinsing treated and regenerated in the same continuous manner as when an aqueous type detergent is used.

As described above, the feasibility of using aqueous type detergents and chlorine-free solvent type detergents in the place of detergents of Flon type solvents and chlorine type solvents is being studied. The problem of disposable of rinsing stands on the way of putting an aqueous type detergent to practical use. The problem of disposal and regeneration of an exhausted detergent or solvent type rinse confronts the practical use of a solvent type detergent.

This invention has been produced for the purpose of coping with the various problems confronting the conventional detergents as described above. It has for an object thereof the provision of a method and an apparatus for the regeneration of washings which allow high-load washings containing a defiling component and a detergent component to be stably and efficiently treated and regenerated in a large volume without requiring dilution.

Another object of this invention is to provide a method and an apparatus for cleaning which permit use of an aqueous detergent or a chlorine-free solvent type detergent in the place of a detergent of the Flon type solvent or the chlorine type solvent, allow efficient disposal of washings and, at the same time, promote advantageous utilization of a rinse.

## Disclosure of the Invention

A first method for the regeneration of washings according to this invention comprises regenerating the washings discharged from at least either a cleaning step for removing with a detergent a defiling component adhering to an object under treatment or a rinsing step for removing with a rinse the detergent component adhering to the object mentioned above, which method is characterized by subjecting the washings to reduced-pressure distillation and, at the same time, circulating the resultant condensate to the rinsing step mentioned above.

A second method for the regeneration of washings according to this invention comprises regenerating the washings discharged from at least either a cleaning step for removing with a detergent a defiling component adhering to an object under treatment or a rinsing step for removing with a rinse the detergent adhering to the object mentioned above, which method is characterized by causing the washings to flow down a heated wall surface and inducing formation of a thin film of the washings and meanwhile distilling the thin film under a reduced pressure thereby effecting regeneration of the washings.

An apparatus for the regeneration of washings according to this invention is characterized by comprising a reduced-pressure vessel provided with a thin film forming part, a liquid reservoir, a mechanism for causing washings which overflows the reservoir and flows down the wall surface of the thin film forming part while forming a thin film to be heated and vaporized under a reduced pressure, and a mechanism for cooling the product of the vaporization and recovering the resultant condensate as a regenerated liquid.

Then, a method for the cleaning according to this invention comprises a cleaning step for removing a defiling component adhering to an object under treatment by the use of a cleaning tank containing a detergent and a rinsing step for removing the detergent component adhering to the object by the use of a series of sequentially connected rinsing tanks containing a rinse and connected so that the rinse is forwarded sequentially therethrough in a direction opposite to the direction of conveyance of the object, which method is characterized by subjecting the washings discharged from the last of the series of sequentially connected rinsing tanks in the direction of the flow of the rinse to reduced-pressure distillation and circulating the resultant condensate to the first of the series of sequentially connected rinsing tanks in the direction of the flow of the rinse and meanwhile effecting the rinsing step mentioned above.

Further, an apparatus for the cleaning according to this invention is characterized by comprising cleaning means provided with a cleaning tank containing a detergent and adapted to remove a defiling component adhering to an object under treatment with the detergent, rinsing means provided with a series of sequentially connected rinsing tanks containing a rinse and connected so as to advance the rinse therethrough in a direction opposite to the direction of conveyance of the object and adapted to remove the detergent component adhering to the object with the rinse, rinsing regenerating means provided with a

reduced-pressure heating mechanism for at least introducing the washings discharged from the last of the series of sequentially connected ringing tanks in the direction of the flow of the rinse and heating and vaporizing the washings under a reduced pressure and a condensing mechanism for condensing the vapor produced by the reduced-pressure heating mechanism, and a circulating system for supplying the condensate obtained by the condensing mechanism to the first of the series of sequentially connected rinsing tanks in the direction of the flow of the rinse.

By using the series of sequentially connected rinsing tanks and causing the rinse to flow through the rinsing tanks in a direction opposite to the direction of conveyance of the object under treatment, the amount of a newly supplied rinse to be required for replenishing the last of the series of sequentially connected rinsing tanks in the direction of flow of the rinse and consequently enabling the cleaning degree in the last rinsing tank to be kept constant can be decreased to about 1/10 to 1/100 of the conventionally normal level, providing that the washings to be discharged is fated to have high load and a high concentration. This invention, owing to the adoption of reduced-pressure distillation for the sake of disposal of the washings, enables washings of high load and a high concentration containing a detergent component as described above to be continuously treated and regenerated with high efficiency and high accuracy without either requiring dilution or suffering effervescence to occur noticeably. Since this invention permits direct disposal of the washings of high load, it can be operated effectively with a closed system. The present invention, in using an aqueous type detergent or a chlorine-free solvent type detergent in the place of a detergent of the Flon type solvent or the chlorine type solvent, allows efficient disposal of the washings and, at the same time, permits effective utilization of the rinse and, therefore, promotes maintenance of quality of cleaning and reduction of the cost of cleaning.

## Brief Description of the Drawings

Fig. 1 is a model diagram illustrating the construction of a cleaning apparatus as one embodiment of this invention; Fig. 2 is a diagram showing test results indicating the relation between the number of rinsing tanks operated in series pattern and the defiled condition of rinse; Fig. 3 is a diagram showing other test results indicating the relation between the number of rinsing tanks operated in series pattern and the defiled condition of rinse; Fig. 4 is a diagram showing test results indicating the defiled condition of rinse during the flow of the rinse through a series of sequentially connected rinsing tanks; Fig. 5 is a model diagram illustrating the construction of a wet wall type apparatus for the regeneration of washings as one embodiment of this invention; Fig. 6 is a diagram illustrating in a magnified scale the essential part of the wet wall type apparatus for the regeneration of washings shown in Fig. 5; Fig. 7 is a diagram illustrating an improved version of the liquid supply in the wet wall type apparatus for the regeneration of the washings shown in Fig. 5; Fig. 8 is a diagram illustrating another improved version of the liquid supply in the wet wall type apparatus for the regeneration of washings shown in Fig. 5; Fig. 9 is a diagram illustrating one example of a thin film forming pipe in the wet all type apparatus for the regeneration of washings according to this invention; Fig. 10 is a diagram illustrating another example of the thin film forming pipe; Fig. 11 is a diagram illustrating yet another example of the thin film forming pipe; Fig. 12 is a diagram showing the relation between the amount of regenerated liquid recovered and the duration of treatment as functions of the amount of liquid supplied in the wet wall type apparatus for the regeneration of washings; Fig. 13 is a diagram comparing the amounts of regenerated liquid recovered by the wet wall type method for reduced-pressure distillation and the tank type method for reduced-pressure distillation; and Fig. 14 is a diagram showing the relation between the amount of regenerated liquid recovered and the duration of treatment as functions of the upper end shape of a thin film forming pipe in the wet wall type apparatus for the regeneration of washings.

## Best Mode of Embodiment of the Invention

Now, the embodiments of this invention will be described below with reference to the accompanying drawings.

Fig. 1 is a model diagram illustrating the construction of an apparatus for cleaning as one embodiment of the method for the regeneration of washings and the method for cleaning according to the present invention. A washing apparatus 1 shown in this diagram is provided as conveying means for an object 2 for cleaning with a basket conveying mechanism 10 and has various steps of cleaning means 20 and rinsing means 30 sequentially disposed along the route of conveyance of the basket conveying mechanism 10. The cleaning apparatus 1 is further provided with washings regenerating means 40 for treating and regenerating the washings discharged from at least either the cleaning means 20 or the rinsing means 30.

The cleaning means 20 is provided with an immersion cleaning tank 22 containing a detergent 21. The object 2 for cleaning is required to be immersed in the immersion cleaning tank 22 in order to be deprived of greasy, watery, and powdery defiling substances adhering thereto. The immersion cleaning tank 22, as occasion demands, may be used as assisted with ultrasonic wave, vibration, or mechanical agitation. The cleaning means 20 may be used in conjunction with a separate shower cleaning device or may be used independently in the form of a shower cleaning device.

The immersion cleaning tank in the cleaning means 20 may be in the form of a series of sequentially connected cleaning tanks. In this case, the sequentially connected cleaning tanks in the series are desired to be so disposed that the detergent 21 overflows the cleaning tanks sequentially in a direction opposite to the direction of the route of conveyance of the conveying mechanism 10.

The rinsing means 30 is likewise provided with a series of sequentially connected rinsing tanks 31. Partition walls 33 of the sequentially connected rinsing tanks 31 have their heights so adjusted that a rinse 32 sequentially overflows the partition walls 33 in a direction opposite to the direction of the route of conveyance of the conveying mechanism 10. To be specific, the rinsing tanks 31 are so constructed that the rinse 32 overflows from a third rinsing tank 31a to a second rinsing tank 31b and then from the second rinsing tank 31b to a first rinsing tank 31c. The first rinsing tank 31c which is positioned on the most downstream side of the flow of liquid is provided with an overflow pipe 34. To this overflow pipe 34 is connected a rinsing discharge pipe 55. This rinsing discharge pipe 35 is so adapted that the rinse 32 is forwarded therethrough to a washings storage tank 41 of the washings regenerating means 40.

The number of the serially connected tanks 31 used in the series pattern does not need to be limited to three but may be suitably selected in conformity with the precision of cleaning required of the object 2 and the degree of defilement of the washings. The number of sequentially connected tanks is desired to be increased in proportion as the load of the washings to be treated is heightened. The running cost of the whole apparatus can be decreased by increasing the number of sequentially connected tanks.

The cleaning apparatus 1 described above is so constructed as to forward the washings discharged from the rinsing means 30 exclusively to the washings regenerating means 40. Optionally, it may be constructed so that the washings may be forwarded also from the immersion cleaning tank 22 of the cleaning means 20 to the washings regenerating means 40.

The washings regenerating means 40 is composed chiefly of the washings storage tank 41, a decompression type heating can 42, a condenser 43, and a regenerated liquid tank 44. The washings storage tank 41 and the decompression type heating can 42 are interconnected through the medium of an automatic valve 46 synchronized with a liquid level sensor 45 disposed inside the decompression type heating can 42. To the upper part of the decompression type heating can 42 is connected a steam pipe 47. This steam pipe 47 interconnects the decompression type heating can 42 and the condenser 43. A regenerated liquid collecting pipe 48 is disposed below the condenser 43. This regenerated liquid collecting pipe 48 is inserted into and connected to the regenerated liquid storage tank 44.

A decompressing pump 49 is connected to the regenerated liquid storage tank 44. It is so adapted as to establish a prescribed depressed state from the regenerated liquid storage tank 44 through the decompression type heating can 42. When the liquid level inside the decompression type heating can 42 descends, the automatic valve 46 opens and washings 50 stored in the washings storage tank 41 is introduced into the decompression type heating can 42 by virtue of the aspirating power which arises from the decompression inside the decompression type heating can 42.

A heater 51 is disposed around the decompression type heating can 42. By this heater 51, the washings 50 introduced into the decompression type heating can 42 is heated under a reduced pressure to vaporize the component to be recovered. A drain valve 52 is connected to the lower part of the decompression type heating can 42 and is utilized for releasing concentrated washings. The depression type heating can 42 is desired to be so adapted as to preclude otherwise possible entrainment of droplets and may be provided, when necessary, in the upper part thereof with a demister or a baffle. A plurality of decompression type heating cans 42 may be parallelly disposed, depending on the amount of the liquid to be treated.

The vapor which is generated by the heating at a low temperature under an atmospheric state is forwarded via the steam pipe 47 to the condenser 43. Inside the condenser 43, a cooling coil 53 connected to a cooling water supply device omitted from illustration is disposed. The vapor supplied into the interior of the condenser 43 is condensed by the cooling coil 53. The resultant condensate is stored as a regenerated rinse 54 in the regenerated liquid storage tank 44. Thus, the regenerated rinse 54 which has undergone distillation under a reduced pressure is stored inside the regenerated liquid storage tank 44.

The distillate (regenerated rinse 54) can be monitored for purity by keeping under observation the change of the temperature of the emanating vapor by means of a temperature sensor which is set in place

at the top of the decompression type heating can 42 or in the steam pipe 47. The monitoring of the regenerated rinse 54 for purity can otherwise be attained by keeping under observation the change of the electroconductivity of the condensate by means of a conductometer (conductivity meter) which is set in place in the lower part of the condenser 43 or in the regenerated liquid storage tank 44. The temperature sensor and the conductometer can be used independently of each other. When they are used together, the control of the regenerated rinse 54 in purity can be attained more efficiently.

The washings regenerating means 40 is provided by way of supplement with defoaming agent supply means 60. This defoaming agent supply means 60 is provided with a defoaming agent storage tank 62. To this defoaming agent storage tank 62, a defoaming agent supply pipe 64 is connected through the medium of an addition amount adjusting valve 63. This defoaming agent supply pipe 64 is inserted into the decompression type heating can 42. Through the defoaming agent supply pipe 64, a defoaming agent 61 is supplied in a suitable amount into the decompression type heating can 42. This addition of the defoaming agent 61 is attained by the aspirating force generated in consequence of the decompression inside the decompression type heating can 42, for example. By the addition of the defoaming agent 61, the possible effervescence of the surfactant-containing washings during the reduced-pressure distillation can be precluded more effectively. As a result, the accuracy of treatment of the reduced-pressure distillation is enhanced.

The regenerated rinse 54 which has undergone the treatment of reduced-pressure distillation by the washings regenerating means 40 mentioned above is supplied from the regenerated liquid storage tank 44 and forwarded by a circulation pump 71 serving as a circulation system via a circulation pipe 72 to the third rinsing tank 31a positioned on the most upstream side of the series of sequentially connected tanks 31 and utilized again as the rinse 32. Since the rinse 32 is constantly treated and put to cyclic use as described above, the apparatus does not need to discharge the treated liquid from its own system and enables the rinse 32 to keep its cleanliness continuously. The apparatus is also capable of similarly treating the detergent 21, when necessary, and preventing the regenerated detergent from leaking out of the system.

Now, the method for cleaning a defiled object and the method for treating and regenerating washings by the use of the apparatus 1 explained above will be described below.

The defiled object 2 is first immersed in the immersion cleaning tank 22 to be deprived of greasy, watery, and powdery defiling substances adhering to the surface thereof. As concrete examples of the detergent 21 which is effectively used in the immersion cleaning tank 22, detergents of varying sorts such as aqueous type detergents, quasi aqueous type detergents, and solvent type detergents may be cited. As concrete examples of the aqueous type detergents, aqueous solutions of inorganic acids, organic acids, and alkalis, detergents formed mainly of surfactants and aqueous solutions of such detergents, and such products as are obtained by combining the detergents mentioned above with various additives may be cited. As concrete examples of the solvent type detergents, such products as are obtained by combining silicone type solvents, hydrocarbon type solvents, perfluorocarbon type solvents, and terpene type solvents with such effective detergent components as surfactants and alcohols and various other additives may be cited. Besides, such quasi aqueous type detergents as alkyl amine oxide type solvents, polyglycol type solvents, terpene type solvents, and hydrocarbon type solvents and such detergents as are obtained by combining the solvents mentioned above with surfactants which rely on the main solvent component of such a detergent to lift defiling substances from a defiled object and then on plain water to rinse the object are also usable. The active components and additives in these detergents are desired to have boiling points higher than the boiling points of components which are to be recovered by reduced-pressure distillation. The same remark holds good for the boiling points of defiling substances which are subjected to the cleansing action.

The object 2 which has been pulled out of the immersion cleaning tank 22 of the cleaning means 20 has the detergent 21 deposited on the surface thereof, it is first rinsed by being immersed sequentially in the component rinsing tanks 31c, 31b, and 31a in the series of sequentially connected tanks 31. As the rinse 32, water is used when the detergent 21 is an aqueous type or quasi aqueous type detergent or a silicone type solvent or a hydrocarbon type solvent is used when the detergent is a solvent type detergent having the solvent as a main component. The rinse 32 is treated and regenerated by the washings regenerating means 40 mentioned above.

Various kinds of detergent 21 and rinse 32 are usable in this invention as described above. Particularly, detergents 21 and rinses 32 which contain a silicone type defoaming component are used advantageously.

Though the silicone type defoaming component is not limited particularly, polyorganosiloxanes represented by the general formula:

$$R^1{}_nSiO_{(4-n)/2} \qquad (1)$$

(wherein $R^1$'s independently stand for a monovalent group selected from the class consisting of substituted or unsubstituted monovalent hydrocarbon groups having one to ten carbon atoms and polyoxyalkylene groups and n stands for a numerical value the average of which is in the range of 1.9 to 2.2). As concrete examples of $R^1$, alkyl groups such as methyl group, ethyl group, propyl group, butyl group, butyl group, and octyl group, alkenyl groups such as vinyl group and allyl group, aryl groups such as phenyl group and tolyl group, aralkyl groups such as $\beta$-phenylethyl group and $\gamma$-phenylpropyl group, groups having halogen atoms, cyano group, hydroxyl group, carboxyl group, carbonyl group, amino group, or alkoxy group as substitutes for at least part of the hydrogen atoms linked to the groups mentioned above, and polyoxyalkylene groups may be cited. Among other groups cited above, methyl group, phenyl group, and polyoxyalkylene groups prove particularly desirable. The polyorganosiloxanes may incorporate therein such hydrolyzable groups as a hydroxyl group linked to a silicon atom and alkoxy group besides $R^1$. The polyorganosiloxanes which are represented by the formula (1) are such that the average value of n is in the range of 1.9 to 2.2. Though they have a substantially linear or cyclic structure, they may partly contain a branched structure.

In the silicone type defoaming components represented by the general formula (1), polyoxyalkylene group-containing polyorgano-siloxanes having at least one siloxane unit contained in the molecule thereof and represented by the general formula:

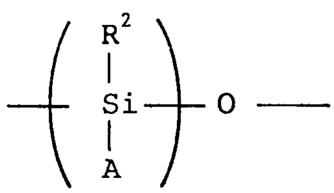

.......... (2)

(wherein $R^2$ stands for an alkyl group or an aryl group and A for a polyoxyalkylene group) may be cited as examples which are used particularly effectively in aqueous type detergents. Since these polyoxyalkylene group-containing polyorganosiloxanes produce a defoaming action and manifest affinity for water, they function as a component capable of forming a stable aqueous dispersion or solution. They are also capable of permeating the boundary between a defiled object and a layer of defiling substances and peeling the layer of defiling substances off the object. Thus, aqueous type detergents can be composed of the polyoxyalkylene group-containing polyorganosiloxanes, water, surfactants, etc.

As the polyoxyalkylene group represented by the symbol A in the aforementioned general formula (2), the monovalent groups represented by the general formula:

$$-R^3-(O-R^4-)_p-OR^5 \quad \text{.......... (3)}$$

(wherein $R^3$ stands for a divalent group selected from the class consisting of alkylene groups having one to eight carbon atoms, $\beta$-hydroxypropyleneoxyalkylene groups having four to 11 carbon atoms, and polymethyleneoxyalkylene groups, $R^4$ for an alkylene group having two to four carbon atoms, $R^5$ for a terminal group selected from the class consisting of a hydrogen atom and monovalent organic groups, and p for a positive integer) may be cited.

The siloxane which constitutes the main backbone of the polyoxyalkylene group-containing polyorganosiloxanes mentioned above is not particularly limited. The organic group which is linked to the silicon atom of this siloxane is basically a methyl group. Optionally, it may contain such a monovalent hydrocarbon group as ethyl group, propyl group, butyl group, or phenyl group or such a monovalent substituted hydrocarbon group as trifluoromethyl group in a proportion incapable of impairing the effect of the organic group. The molecular weight of the siloxane and the molecular weight thereof per polyoxyalkylene group are not particularly limited. For the practical purpose, however, the molecular weight of the siloxane per polyoxyalkylene group is desired to be in the approximate range of 100 to 5,000. The amount of the polyoxyalkylene group is not particularly limited. For the sake of the stability of the system, this amount is desired to be not less than 5 mol% based on the total amount of all the organic groups linked to the silicon atom of the polyorganosiloxane.

As concrete examples of the detergent containing such a polyoxyalkylene group-containing polyorganosiloxane as mentioned above, compositions of various polyoxyalkylene group-containing polyorganosiloxanes represented by the formula (2), a surfactant, and water may be cited. These ternary compositions may incorporate therein such a low molecular polyorganosiloxane as a linear polydiorganosiloxane represented by the general formula:

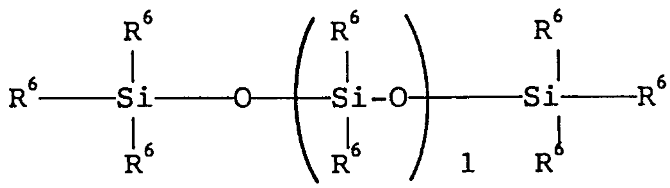

.......... (4)

(wherein $R^6$'s independently stand for a substituted or unsubstituted monovalent organic group and l stands for an integer in the range of 0 to 5; which definition applies similarly hereinafter) or a cyclic polydiorganosiloxane represented by the general formula:

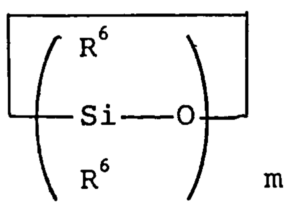

........... (5)

(wherein m stands for an integer in the range of 3 to 7). In the formulas (4) and (5) mentioned above, $R^6$'s independently stand for a substituted or unsubstituted monovalent organic group. As concrete examples of the organic group, alkyl groups such as methyl group, ethyl group, propyl group, and butyl group, unsaturated monovalent hydrocarbon groups such as phenyl group, and substituted monovalent hydrocarbon groups such as trifluoromethyl group may be cited. Among other groups cited above, methyl group proves most desirable from the standpoint of safety of the system and maintenance of the volatility. These low molecular polyorganosiloxanes are included in the polyorgano-siloxanes of the formula (1) mentioned above and possess in themselves an ability to defoam.

Though the compositional ratio of the components of the ternary composition is not particularly limited, the amount of the surfactant to be incorporated is desired to be in the range of 10 to 1,000 parts by weight based on 100 parts by weight of the polyoxyalkylene group-containing polyorganosiloxane. The amount of the low molecular polyorganosiloxane to be incorporated is desired to be not more than 1,000 parts by weight based on 100 parts by weight of the total amount of the surfactant and the polyoxyalkylene group-containing polyorganosiloxane. The ternary composition manifests weak cleaning power when the amount of the surfactant to be incorporated is unduly small. It manifests weak permeability when the amount of the surfactant is unduly large. When the amount of the low molecular polyorganosiloxane to be incorporated is unduly large, this component does not easily disperse in the system and the aqueous composition produced at all suffers from inferior stability. Though the amount of water to be incorporated is not particularly limited, it is desired to be not less than 40% by weight based on the total amount of the whole composition from the standpoint of safety of detergent.

As concrete examples of the surfactant mentioned above, various surfactants such as cationic, anionic, nonionic, and amphoteric surfactants and various combinations of these surfactants may be cited. Besides, polyhydric alcohols such as ethylene glycol monomethyl ether, ethylene glycol monoethyl ether, ethylene glycol monopropyl ether, ethylene glycol monobutyl ether, and diethylene glycol monobutyl ether, derivatives of these polyhydric alcohols, and polyoxyethylene-polyoxypropylene copolymers represented by the general formula:

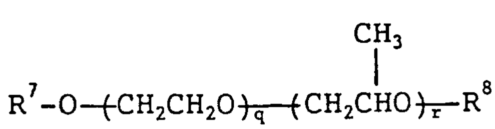

.......... (6)

(wherein $R^7$ and $R^8$ independently stand for a hydrogen atom or a monovalent hydrocarbon group and q and r stand for numbers such that the sum q + r assumes a numerical value the average of which is not less than 1) and including the compounds of the following formulas:

$$HO-(CH_2\overset{CH_3}{\overset{|}{C}}HO)_r-H \quad \text{and} \quad HO-(CH_2CH_2O)_q-(CH_2\overset{CH_3}{\overset{|}{C}}HO)_r-H$$

as typical examples can be used as effectively as surfactants.

In consideration of the effect to be manifested by a given surfactant when it is used in combination with a polyoxyalkylene group-containing polyorganosiloxane, the surfactant is desired to be selected from among the, surfactants of the anionic, nonionic, and amphoteric types. Particularly when a combination anionic-nonionic surfactant or a combination amphoteric-nonionic surfactant is used, conspicuous synergism is obtained between the detergency due to the surfactants and the permeability due to the low molecular polyorganosiloxane or polyoxyalkylene group-containing polyorganosiloxane.

The low molecular polyorganosiloxanes represented by the formulas (4) and (5) mentioned above also function as a silicone type solvent which is one of the main components of a solvent type detergent. When a detergent having this silicone type solvent as a main component is used, therefore, reduced-pressure distillation is infallibly obtained and, meanwhile, effervescence is effectively curbed.

Incidentally, the cleaning apparatus 1 of this embodiment uses a series of three rinsing tanks 31 sequentially connected with an overflow. It causes the rinse 32 to flow down in a direction opposite to the direction of conveyance of the object under treatment. A cleaning test (1 tact: 5 minutes) was carried out on 20 A4 substrates smeared with a defiling substance as the object 2 under treatment by the use of an immersion cleaning tank 22 having a capacity of 50,000 g and a series of sequentially connected rinsing tanks 31 (consisting of rinsing tanks 31a, 31b, 31c). An aqueous type detergent was used as the detergent 21 and water as the rinse 31. The amount of a liquid to be brought into the system by the object 2 and the amount of a liquid to be brought out of the system were each fixed at 50 g and the load of BOD, that of COD, and that of n-hexane in the immersion cleaning tank 22 were fixed each at 10,000 mg/liter. In the test performed under the conditions described above, the amount of new supply of liquid (rinse) to the third rinsing tank 31a was varied and the state of load in the component rinsing tanks 31c, 31b, and 31a was determined.

In a test run using a replenishment of 800 g (9.61/hr), the load in the first rinsing tank 31c was found to be 6,000 mg/lit, that in the second rinsing tank 31b to be 360 mg/lit, and that in the third rinsing tank 31a to be 19 mg/lit. The magnitude 19 mg/lit mentioned above approximates that with city water and the magnitude 360 mg/lit represents an ample level of cleanliness for the cleaning of an ordinary run. The test results indicate that the cleanliness of the final rinsing tank 31a could be maintained with a replenishment approximately of 1/10 to 1/100 of the conventionally normal level by causing the rinse 32 to flow down in the direction opposite to the direction of conveyance of the object 2 under treatment.

Another cleaning test was carried out on 20 A4 substrates smeared with flux (amount of flux deposited: 5 g) as the object 2 under treatment by the use of a series of two connected rinsing tanks 42 liters and 90 liters respectively in capacity. As the detergent 21, a solvent type detergent obtained by adding an alcohol as a principal detergent component to a silicone type solvent (produced by Tokyo Shibaura Electric Co., Ltd. and marketed under product code of "FRW-17") was used. As the rinse 32, a silicone type solvent (produced by Tokyo Shibaura Electric Co., Ltd. and marketed under product code of "FRW-1") was used. The relation between the number of rounds of cleaning and the concentration of the cleaning component (alcohol) in each of the rinsing tanks is shown in Fig. 2. The test results obtained by using a series of three sequentially connected rinsing tanks are shown in Fig. 3. It is clearly noted from the data given in these diagrams that when a plurality of rinsing tanks are used in the sequentially connected manner as described above, the degree with which the rinse is defiled decreases in the order in which the rinsing tanks are arranged in the direction of flow of the rinse and that the extent of the defilement decreases in proportion as the number of rinsing tanks increases. Fig. 4 shows the results of a test performed with a set of two connected rinsing tanks and with the last rinsing tank replenished at a rate of 2 kg/hr. It is clearly noted from the data of Fig. 4 that when the control limits of liquid is set at an alcohol concentration of 20%, the cleaning can be semipermanently continued so long as the rate of circulation of the rinse can be fixed at 2 kg/hr.

Under the same conditions as those used in the tests described above, the cleaning apparatus using one rinsing tank, a set of two connected rinsing tanks, or a series of three sequentially connected rinsing tanks was operated with the solvent type detergent FRW-17 and the rinse FRW-L to compare the performance of the apparatus in terms of the number of rounds of cleaning. The results of this test are shown in Table 1 and Table 2. The results given in Table 1 and Table 2 respectively represent cases using control limits of alcohol of 15% and 20% in the last rinsing tank. In the column of each table titled "number of rounds of cleaning with fresh liquids," the numbers of rounds of cleaning which were obtained with wholly fresh supplies of the detergent and the rinse are indicated. In the column titled "number of rounds of cleaning after replacement of liquids," the numbers of rounds of cleaning which were obtained, in the case using three rinsing tanks, for example, after the rinse in the third rinsing tank had been transferred to the second rinsing tank, the rinse in the second rinsing tank transferred to the first rinsing tank, and the rinse in the third rinsing tank replenished with a fresh supply in consequence of the rise of the alcohol concentration in the last rinsing tank to the control limits are indicated. In the case using two rinsing tanks, the results obtained similarly to those described above are indicated. In the case using one rinsing tank, the results obtained after the rinse in the sole rinsing tank had been replaced wholly with a fresh supply are indicated.

Table 1

| | Capacity of cleaning tank 42 liters | | | | | |
|---|---|---|---|---|---|---|
| | One rinsing tank | | Two rinsing tanks | | Three rinsing tanks | |
| Control limits (concentration of alcohol) | 15 % | 20 % | 15 % | 20 % | 15 % | 20 % |
| Number of rounds of cleaning with fresh liquid | 70 | 110 | 310 | 370 | 590 | 670 |
| Number of rounds of cleaning after replacement of liquid | 70 | 110 | 230 | 280 | 340 | 370 |

Table 2

| | Capacity of cleaning tank 90 liters | | | | | |
|---|---|---|---|---|---|---|
| | One rinsing tank | | Two rinsing tanks | | Three rinsing tanks | |
| Control limits (concentration of alcohol) | 15 % | 20 % | 15 % | 20 % | 15 % | 20 % |
| Number of rounds of cleaning with fresh liquid | 170 | 230 | 650 | 790 | 1250 | 1460 |
| Number of rounds of cleaning after replacement of liquid | 170 | 230 | 520 | 620 | 730 | 810 |

It is noted from Table 1 and Table 2 that the number of rounds of cleaning is increased by increasing the number of rinsing tanks and that the increase of the number of rounds of cleaning is ensured by circulating the rinse.

From the results of the various tests described above, it is noted that the cleanliness of the last rinsing tank 31a can be maintained with only slight circulation of the rinse as compared with the conventionally normal level by causing the rinse 32 to flow down in a direction opposite to the direction of conveyance of the object 2 under treatment. It is further noted that the number of rounds of cleaning can be increased and the cost of cleaning can be decreased as a result, providing that the discharged washings has high load and high concentration when the circulation of liquid is carried out as described above. When the washings of such high load can be directly treated, the cleaning apparatus can be constructed in the form of a closed system. The washings of high load described above, however, can not be directly treated by such conventional methods of effluent disposal as the activated carbon adsorption method, the ion-exchange method, and the film separation method.

The cleaning apparatus 1 of the present embodiment, therefore, adopts the treatment of reduced-pressure distillation as the washings regenerating means 40. The object of this invention is accomplished so long as the internal pressure of the decompression type heating can 42 is lower than the atmospheric pressure. This internal pressure nevertheless is desired to be reduced to a level in the approximate range of

5 to 200 Torrs, though variable with the kind of the treating liquid. By this treatment of reduced-pressure distillation, the washings of high load can be directly treated and regenerated without being diluted. Further, the fact that the temperature of the heat treatment can be set at a low level ensures exaltation of the thermal efficiency of the treatment. The danger of the use of an inflammable solvent for the treatment can be also diminished. The reduced-pressure distillation not only heightens the efficiency of treatment and the thermal efficiency but also curbs vaporization and thermal decomposition of various substances entrained in the washings and precludes deposition of scale on pipes and other parts.

The reduced-pressure distillation described above allows effective treatment and regeneration of the washings entraining surfactant and various similar substances while preventing the washings from otherwise possible effervescence. The detergent 21 has the possibility of effervescing in the process of reduced-pressure distillation, depending on the composition of detergent. In this case, the effervescence can be effectively precluded by adding the defoaming agent 61 to the detergent through the medium of the defoaming agent supply means 60. As concrete examples of the defoaming agent 61 heretofore known in the art, various defoaming agents of the silicone type, the alcohol type, the ether type, the phosphoric acid type, and the amine type may be cited. In consideration of such factors as continuation of treatment, exposure to a high working temperature in the range of 30 to 100 ° C, and variation of the pH value of the treating liquid in a wide range from the zone of strong acid to that of strong alkali, it is particularly desirable to use a silicone type defoaming agent.

As the silicone type defoaming agent, a composition which contains at least a polyorganosiloxane represented by the formula (1) mentioned above may be cited. A polyorganosiloxane of the formula (1) containing a polyoxyalkylene group as part of the substituent $R^1$, namely a polyoxyalkylene group-containing polyorganosiloxane containing at least one siloxane unit in the molecule thereof as represented by the formula (2) mentioned above, can be used by itself as the defoaming agent under discussion.

When the use of such an ordinary silicone oil as a polyorganosiloxane represented by the general formula:

$$R^9{}_nSiO_{(4-n)/2} \qquad (7)$$

(wherein $R^9$'s independently stand for a substituted or unsubstituted monovalent hydrocarbon group having one to ten carbon atoms and n stands for a numerical value the average of which is in the range of 1.9 to 2.2) is contemplated, it is desirable to use this silicone oil in conjunction with an inorganic filler. As concrete examples of the filler which is usable herein, such particulate substances as aerosol silica, wet silica, fused silica, alumina, titanium dioxide, talc, calcium carbonate, silicon nitride, silica alumina, zeolite, ground quartz, aluminum hydroxide, polyorganosilsesquioxane powder, and silicon rubber powder and such products as are obtained by giving the particulate substances mentioned above a surface treatment with alcohol, silane, silazane, and siloxane may be cited. Among the fillers mentioned above, silica powder proves particularly desirable because it produces an ideal defoaming effect.

The silicone oil described above constitutes the active component of a defoaming agent and possesses an ability to curb effervescence. The inorganic filler enhances the dispersibility of the silicone oil and, at the same time, functions as an auxiliary component for breaking produced bubbles and repressing occurrence of bubbles.

Further, as the silicone type defoaming agent, a composition obtained by mixing a silicone oil represented by the formula (7) mentioned above with an inorganic filler and incorporating a polyoxyalkylene group-containing polyorganosiloxane containing at least one siloxane unit in the molecule thereof as represented by the formula (2) mentioned above in the mixture is ideally used. In the composition, the polyoxyalkylene group-containing polyorganosiloxane lends itself to exalting the dispersibility of the composition and the ability to curb effervescence and contributes conspicuously to improvement of the dispersibility of the silicone oil.

Besides the components described above, the silicone type defoaming agent is allowed to incorporate therein a siloxane resin consisting substantially of a $(CH_3)_3SiO_{1/2}$ unit and a $SiO_2$ unit and containing these units at a ratio in the range of 0.4 to 1.2 and a surfactant. The copolymerized siloxane resin enhances the dispersibility of the silicone oil and, at the same time, manifests an ability to curb effervescence. The surfactant functions as an auxiliary component for the various components mentioned above and contributes to enhancement of the dispersibility and formation of an emulsified state. Various types of surfactants already mentioned can be used for the sake of the incorporation under discussion.

The various components described above are desired to be combined in such a mixing ratio that the proportion of the silicone oil is in the range of 1 to 99% by weight, that of the inorganic filler is in the range of 0.1 to 22% by weight, and that of the polyoxyalkylene group-containing polyorganosiloxane is below 99%

by weight. The amount of the copolymerized siloxane resin to be incorporated is desired to be not more than 33% by weight and that of the surfactant to be not more than 22% by weight. The composition suffers a loss in the ability to produce an immediate effect if the amount of the silicone oil is less than 1% by weight. The produced composition acquires ample dispersibility only with difficulty if the amount of the silicone oil exceeds 99% by weight. Preferably, the amount of the silicone oil to be incorporated is in the range of 5 to 50% by weight. The composition of ample dispersibility is produced only with difficulty if the amount of the inorganic filler to be incorporated is less than 0.1% by weight. The composition to be produced acquires a stably emulsified state with difficulty and manifests inferior dispersibility within the system if the amount of the inorganic filler exceeds 22% by weight. Preferably, the amount of the inorganic filler to be incorporated is in the range of 0.5 to 10% by weight. The composition betrays deficiency in the ability to produce an immediate effect and the ability to curb effervescence if the amount of the polyoxyalkylene group-containing polyorganosiloxane to be incorporated exceeds 99% by weight. The composition to be produced acquires a stably emulsified state only with difficulty and manifests inferior dispersibility in the system if the amount of the copolymerized siloxane resin to be incorporated exceeds 33% by weight.

The silicone type defoaming agent prepared as described above is added in an amount of not less than 0.01 ppm based on the amount of the washings under treatment. The silicone type defoaming agent fails to manifest the effect thereof amply if the amount thereof to be added is less than 0.01 ppm. Desirably, the amount of the silicone type defoaming agent to be added is in the range of 0.1 to 10,000 ppm, preferably 1 to 1,000 ppm. The addition of the silicone type defoaming agent to the detergent may be carried out continuously or, depending on the amount of the object under treatment, intermittently on the condition that the amount of the silicone type defoaming agent to be added falls within the range specified above.

The cleaning apparatus 1 of the present embodiment is so constructed that the defoaming agent 61 is introduced into the decompression type heating can 42 at the same time that the washings 50 is supplied to the interior of the decompression type heating can 42. This addition of the defoaming agent 61 is only required to be made prior to the reduced-pressure distillation. It is permissible to construct the cleaning apparatus 1 so that the defoaming agent 61 may be scattered in the decompression type heating can 42 whenever the contents of the decompression type heating can 42 have effervesced. It is otherwise allowable to construct the cleaning apparatus 1 so that the defoaming agent 61 may be supplied into the washings storage tank 41. The use of the defoaming agent 61 may be attained by having a coating of this agent deposited in advance on the surface of the demister or the baffle which is disposed on the decompression type heating can 42.

When the detergent 21 or the rinse 32 which contains the silicone type defoaming component of the description given above is used, the reduced-pressure distillation can be carried out without requiring addition of the defoaming agent 61. It is nevertheless more desirable to use the defoaming agent 61 such as, for example, a silicone type defoaming agent additionally in this case.

By using such a silicone type defoaming agent or a silicone type defoaming component as described above, the effervescence which would be possibly generated otherwise in the washings entraining such detergent components as surfactant can be curbed more effectively when the washings is in the process of the reduced-pressure distillation. As a result, the washings 50 which possesses high load and assumes a varying pH value in a wide range from the zone of strong acid to that of strong alkali can be directly and continuously treated by the reduced-pressure distillation with high accuracy and efficiency without requiring dilution.

The cleaning apparatus 1 constructed as described above permits a decrease in the amount of the rinse 32 to be used (to be circulated) because it uses the series of a plurality of sequentially connected rinsing tanks 31 and causes the rinse 32 to flow down in a direction opposite to the direction of conveyance of the object 2 under treatment. As a result, the discharged washings 50 assumes a high concentration and manifests high load. Since the cleaning apparatus 1 is provided with the washings regenerating means 40 utilizing the reduced-pressure distillation, however, it enables such washings 50 as described above to be directly and continuously treated and regenerated. Further, by the additional use of the silicone type defoaming agent or defoaming component, the treatment and regeneration of the washings 50 can be effected still more efficiently. Thus, the cyclic use of the rinse is ensured and the cleanliness of the rinse is maintained. Further, since this cleaning apparatus 1 can clean and rinse a given object under such conditions as mentioned above, it is capable of effecting the cleaning to a high degree at a notably low cost as compared with the apparatus operated by the conventional method. The method heretofore used for the disposal of washings has been incapable of fulfilling the treatment in such a closed system as is attained by the present invention.

Now, concrete examples of the cleaning of the object 2 under treatment and the treatment of the washings by the use of the cleaning apparatus 1 constructed as described above will be cited below.

Example 1:

With the cleaning apparatus 1 (using three rinsing tanks) described above, shadow masks made of amber and smeared with 8 g of residual press oil were cleaned under the following conditions. As the detergent 21, an aqueous type detergent, viz. an aqueous solution of 20% by weight of a detergent composition of 10 parts by weight of stearic acid triethanol amine, 5 parts by weight of polyoxyethylene alkylphenyl ether, 10 parts by weight of sodium silicate, and 75 parts by weight of city water was used. Water was used as the rinse 32. The use of the defoaming agent 61 was omitted. The amount of the washings to be circulated from the regenerating liquid storage tank 44 to the third rinsing tank 31a of the series of sequentially connected rinsing tanks 31, namely the amount of the washings to be treated by the reduced-pressure distillation, was set at 2 liters/hr. The reduced-pressure distillation of the washings was carried out at a reduced pressure of 25 Torrs and an internal temperature of the heating can of 25 to 30°C.

After 1,200 shadow masks had been cleaned under the conditions mentioned above, the washings (sampled from the washings storage tank 41) and the regenerated rinse (sampled from the regenerating liquid storage tank 44) were tested for BOD, COD, the amount of extracted n-hexane, and SS. The results of the test are shown in Table 3.

Comparative Experiment 1:

The cleaning of shadow masks and the treatment of washings were carried out by following the procedure of Example 1 while performing the treatment of the washings by combining the techniques of ultrafiltration, activated carbon adsorption, and ion exchange. The washings and the regenerated rinse obtained at the end of the treatment were tested for quality. The results are additionally shown in Table 3. In the present comparative experiment, since the rinsing was such as to entail early clogging of various beds of physical treating agents used in the apparatus and impede continued operation of the apparatus, the rinsing was diluted with city water to about five times the original volume to continue the operation. The results of the test of washings reported were those obtained after this dilution. Specifically, in the treatment of washings, the ultrafiltration was carried out by the use of a polyolefin type filter membrane (ratio of removal: 100% oil and 0% surfactant), the activated carbon adsorption was carried out by using 54 liters of activated carbon having a particle diameter of 0.9 mm and passing the washings at a spacial velocity of 0.2/hr, and the ion exchange was carried out by the use of mixed bed cartridges (25 liters x 2) of strongly acidic resin and strongly basic resin. For referential purpose, the results of a test conducted on the city water for quality are additionally shown in Table 3.

Table 3

| | Example 1 | | Comparative Experiment 1 *1 | | Reference (City water) |
|---|---|---|---|---|---|
| | Raw water | Treated water | Raw water | Treated water | |
| pH | 12.0 | 6.2 | 10 | 7.3 | 6.9 |
| BOD (mg/lit) | 3000 | 1.2 | 600 | 60 | 0.7 |
| COD (mg/lit) | 3700 | 1.1 | 720 | 90 | 0.8 |
| SS (mg/lit) | 20 | None detected | 12 | None detected | None detected |
| n-Hex (mg/lit) | 3400 | None detected | 760 | None detected | None detected |

*1: Under the heading "physical conditions of raw water" in Comparative Experiment 1, the data obtained after dilution of a sample with city water to five times the original volume are indicated.

It is clearly noted from Table 3 that by the method of this invention, washings of high load and a high concentration could be treated and regenerated with high accuracy. The quality of the cleaning itself was also highly satisfactory.

Now, examples of the production of silicone type defoaming agents which were used in the following working examples will be described below.

(Example 1 of production of silicone type defoaming agent)

In a three-neck flask having an inner volume of 1,000 cc and provided with a stirrer, a thermometer, a nitrogen purge, and a dropping funnel, 15.5 g of a trimethylsilyl group terminal-sealed dimethyl silicone oil (viscosity at 25 ° C: 50 cSt) and 1.5 g of silica powder (produced by Fuji-Davison K.K. and marketed under trademark designation of "Cyloid 266") were stirred and heated simultaneously at a temperature of 160 ° C for four hours. The resultant hot mixture was cooled to room temperature. The cooled mixture and 8 g of $(CH_3)_3SiO_{1/2}/SiO_2$ copolymer $[(CH_3)_3SiO_{1/2}/SiO_2 = 0.4]$, 70 g of a polyoxyethylene-modified silicone represented by the formula:

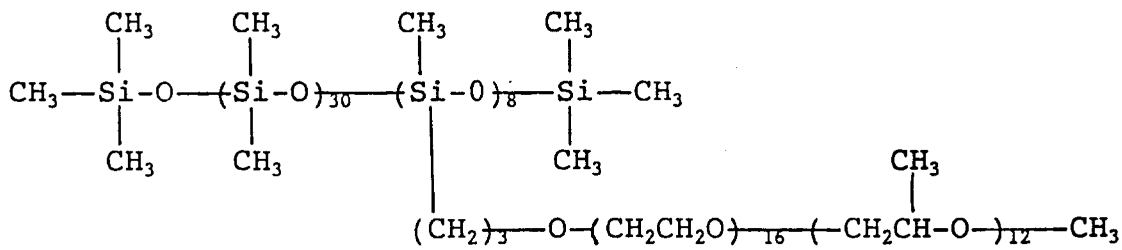

and 5 g of a polyoxyethylene (20 mols added) sorbitan monooleate added thereto were uniformly dispersed by the use of a homomixer. As a result, a viscous light yellow silicone type defoaming composition A-1 was obtained.

(Example 2 of production of silicone type defoaming agent)

In a three-neck flask having an inner volume of 1,000 cc and provided with a stirrer, a thermometer, a nitrogen purge, and a dropping funnel, 15.5 g of a trimethylsilyl group terminal-sealed dimethyl silicone oil (viscosity at 25 ° C: 50 cSt), 15 g of a trimethylsilyl group terminal-sealed dimethyl silicone oil (viscosity at 25 ° C:2,000 cSt), and 1.6 g of silica powder (produced by Fuji Davison K.K. and marketed under trademark designation of Cyloid 266") were simultaneously stirred and heated at a temperature of 160 ° C for four hours. The resultant hot mixture was cooled to 60 ° C. The cooled mixture and 2 g of polyoxyethylene (5 mols added) nonylphenyl ether and 1 g of polyoxyethylene (20 mols added) stearyl ether added thereto were stirred and kept at 60 ° C for 10 minutes. Then, the mixture was kept stirred and 65.4 g of water adjusted to 60 ° C were stirred together and, at the same time, cooled to 30 ° C. The cooled mixture was emulsified by the use of a colloid mill (mill distance: 30 mils) to obtain a silicone type defoaming composition A-2.

(Examples 3 to 5 of production of silicone type defoaming agent)

Silicone type defoaming compositions A-3 to A-5 having such compositions as are indicated in Table 4 were obtained by repeating the procedure of Example 1 or Example 2 of production described above.

Table 4

| | Silicone type defoaming agent (parts by weight) | | | | |
|---|---|---|---|---|---|
| | A-1 | A-2 | A-3 | A-4 | A-5 |
| Dimethyl silicone oil (50 cSt) | 15.5 | 15 | 23.5 | 55 | — |
| " (2,000 cSt) | — | 15 | — | 38 | — |
| Silica powder | 1.5 | 1.6 | 1.5 | 7 | — |
| $(CH_3)_3SiO_{1/2}/SiO_2$ copolymer | 8 | — | — | — | — |
| POA-modified silicone | 70 | — | 70 | — | 90 |
| Surfactant | | | | | |
| Polyoxyethylene (50 mol added) nonylphenylene ether | — | 2 | — | — | 5 |
| Polyoxyethylene (20 mol added) stearyl ether | — | 1 | — | — | 5 |
| Polyoxyethylene (20 mol added) sorbitan monooleate | 5 | — | 5 | — | — |

Example 2:

By the use of the cleaning apparatus 1 (using three rinsing tanks) described above, shadow masks made of amber and smeared with 8 g of press oil were cleaned by using as the detergent 21 an aqueous

type detergent, viz. an aqueous solution containing 20% by weight of a detergent composition of 10 parts by weight of myristic acid monoethanol amine, 5 parts by weight of polyoxyethylene lauryl ether, 10 parts by weight of sodium silicate, and 75 parts by weight of city water and using water as the rinse 32. As the defoaming agent 61, the silicone type defoaming agents of Examples 1 to 5 of production shown in Table 4 were severally used in an amount of 200 ppm of active component based on the amount of washings. The amount of the washings to be circulated from the regenerating liquid storage tank 44 to the third rinsing tank 31a of the series of sequentially connected rinsing tanks 31, namely the amount of the washings to be treated by the reduced-pressure distillation, was set at 2 liters/hr. The reduced-pressure distillation of the washings was carried out at a reduced pressure of 25 Torrs and an internal temperature of the heating can of 25 to 30 ° C.

The cleaning apparatus in each run was operated for 200 hours under the conditions mentioned above. Then, the washings (sampled from the washings storage tank 41) and the regenerated rinse (sampled from the regenerating liquid storage tank 44) were tested for pH, BOD, COD, amount n-hexane extract, and SS. The results are shown in Table 5.

Comparative Experiment 2:

The cleaning of shadow masks and the treatment of washings were carried out by following the procedure of Example 2 while performing the treatment of the washings by combining the techniques of ultrafiltration, activated carbon adsorption, and ion exchange. The washings and the regenerated rinse obtained at the end of the treatment were tested for quality. The results are additionally shown in Table 3. In the treatment of the rinsing in the present comparative experiment, similarly to that in Comparative Experiment 2, the rinsing was diluted with city water to about 5 times the original volume prior to the treatment. The detailed conditions of this treatment were the same as those used in Comparative Experiment 1.

Table 5

| Sample No. | Defoaming agent | Physical condition of raw water | | | | | Phisical condition of treated water | | | | |
|---|---|---|---|---|---|---|---|---|---|---|---|
| | | pH | BOD | COD | SS | n-Hex | pH | BOD | COD | SS | n-Hex |
| Example 2 | | | | | | | | | | | |
| 1 | A-1 | 12.0 | 2700 | 3100 | 50 | 2100 | 6.1 | 1.0 | 1.2 | None Detected | None Detected |
| 2 | A-2 | 12.2 | 2900 | 3300 | 55 | 2300 | 6.7 | 2.5 | 3.7 | '' | 10 |
| 3 | A-3 | 12.5 | 3000 | 3700 | 60 | 2300 | 6.0 | 1.1 | 1.3 | '' | None Detected |
| 4 | A-4 | 12.3 | 2600 | 3000 | 60 | 2100 | 6.8 | 12 | 12 | '' | 20 |
| 5 | A-5 | 12.1 | 2800 | 2900 | 70 | 2200 | 7.8 | 11 | 12 | '' | 25 |
| Comparative Experiment 2 *1 | — | 10.0 | 780 | 650 | 12 | 790 | 8.8 | 420 | 320 | 7 | 360 |

*1: Under the heading "physical conditions of raw water" in Comparative Experiment 2, the data obtained after dilution of a sample with city water to five times the original volume are indicated.

It is clearly noted from Table 5 that the methods conforming to this invention enabled even washings of high load and a high concentration to be treated and regenerated with high accuracy and efficiency and that the silicone type defoaming agents endured continuous use in the treatment. The quality of cleaning itself was highly satisfactory. In contrast in Comparative Experiment 2, no sufficient treatment could be given to the washings notwithstanding the rinsing was diluted with city water. Comparative Experiment 3:

Shadow masks were cleaned by following the procedure of Example 2 while carrying out the treatment of distillation of washings under normal pressure. This treatment was performed without use of a defoaming agent. For the distillation, the inner temperature of the heating can was set at 135 ° C and the rate of distillation at 0.8 liter/hr. After the cleaning and the treatment of washings, the washings sampled from the washings storage tank was tested for $COD_1$ and the regenerated rinse sampled from the regenerated liquid storage tank was tested for $COD_2$ and the ratio of COD residue [$COD_2/COD_1$ x 100(%)] was determined. The ratio of COD residue was found to be 1.9%.

It was confirmed that while the ratio of COD removal (the other items of test for water quality showed relation with the COD value) itself showed an appreciable value, the liquid in the third rinsing tank succumbed to degradation of quality with the elapse of time because of an unduly low rate of distillation and could not be continuously used. Further, since the heating temperature of the raw water rose up to 135 ° C, the raw water was susceptible of thermal deterioration and decomposition and the adhesion of soap scum to the can wall was conspicuous. When the heating temperature was further elevated for the purpose of exalting the capacity for treatment, the drawbacks mentioned above were further aggravated and the raw water could hardly be used continuously.

Example 3:

By the use of a cleaning apparatus (using two rinsing tanks) similar to the cleaning apparatus 1 mentioned above, die-cast gears smeared with 5 g of a mold release agent were cleaned by using, as the detergent 21, an aqueous type detergent, viz. an aqueous solution containing 20% by weight of a detergent composition of 10 parts by weight of sodium myristate, 10 parts by weight of polyoxyethylene nonylphenyl ether, 5 parts by weight of sodium silicate, and 75 parts by weight of city water and, as the rinse 32, water. As the defoaming agent 61, the silicone type defoaming agents of Examples 1 to 5 of production shown in Table 4 were severally used in an amount of 200 ppm as active component based on the amount of the washings. In a test run which omitted use of a defoaming agent, the washing and the treatment of washings were similarly carried out. The rate of distillation was set at 5 liters/hr. The reduced-pressure distillation of the washings was performed at a reduced pressure of 150 Torrs and an inner temperature of the heating can of 75 ° C.

After 500 gears were cleaned under the conditions mentioned above, the washings sampled from the washings storage tank was tested for $COD_1$ and the regenerated rinse sampled from the regenerating liquid storage tank was tested for $COD_2$ and the ratio of residual COD [$COD_2/COD_1$ x 100 (%)]. The results of the test are shown in Table 6. The ratios of decrease of COD found in Example 2 are additionally shown in Table 6.

Example 4:

By the use of the cleaning apparatus 1 (using three rinsing tanks), lead frames made of 42 alloy and smeared with 1 g of punch oil were cleaned by using, as the detergent 21, an aqueous type detergent, viz. an aqueous solution containing 10% by weight of a detergent composition of 5 parts by weight of sodium myristate, 5 parts by weight of sodium gluconate, 5 parts by weight of sodium hydroxide, 20 parts by weight of sodium silicate, and 65 parts by weight of city water and, as the rinse 32, water. As the defoaming agent 61, the silicone type defoaming agents of Examples 1 to 5 of production shown in Table 4 were respectively used in an amount of 200 ppm as active component based on the amount of the washings. Even in a test run which omitted use of a defoaming agent, the cleaning and the treatment of washings were similarly carried out. The rate of distillation was set at 10 liters/hr. The reduced-pressure distillation of the washings was carried out at a reduced pressure of 40 Torrs and an internal temperature of the heating can of 50 ° C.

After 50,000 lead frames were cleaned under the conditions mentioned above, the washings and the rinsing were tested for the ratio of residual COD. The results of the test are shown in Table 6.

Examples 5 to 7:

The cleaning and the treatment of washings were carried out by respectively following the procedures of Examples 2, 3, and 4 while using the various types of defoaming agent other than the silicone type defoaming agent shown in Table 6. Then, the washings and the rinsing were tested to determine the ratio of residual COD in the same manner as in Example 3. The results are shown in Table 6. The defoaming agents other than the silicone type defoaming agent were added in respective amounts required to obtain a

degree of prevention of defoaming of not less than 50% based on the amount of the washings. The degree of prevention of defoaming was calculated based on the following formula.

Degree of prevention of defoaming = $[(t_s)_0 - t_s)/(t_s)_0$

(wherein $t_s$ stands for the average life (sec) of 1 ml of foam in the presence of a defoaming agent and $(t_s)_0$ for the average life (sec) of 1 ml of foam in the absence of a defoaming agent).

Table 6

| Defoaming agent | | | Ratio of residual COD (%) | | |
|---|---|---|---|---|---|
| Kind | Amount added (ppm) | Initial degree of defoamation (%) | | | |
| | | | Example 2 | Example 3 | Example 4 |
| Silicone type defoaming agent A-1 | 200 | 100 | 0.04 | 0.05 | 0.03 |
| " A-2 | 200 | 96 | 0.1 | 1.5 | 1.3 |
| " A-3 | 200 | 100 | 0.04 | 0.09 | 0.01 |
| " A-4 | 2000 | 88 | 0.4 | 5 | 1.5 |
| " A-5 | 2000 | 96 | 0.4 | 6 | 0.1 |
| (No defoaming agent used) | ---- | ---- | 9 | 7 | 10 |
| | | | Example 5 | Example 6 | Example 7 |
| (Alcohol) 3-Heptanol | 10000 | 62 | 6 | 9 | 7 |
| Tetradecanol | 4000 | 53 | 8 | 10 | 11 |
| 2-Ethylhexanol | 10000 | 73 | 9 | 7 | 7 |
| (Ether) 3-Heptyl cellosolve | 50000 | 68 | 6.5 | 1.3 | 9 |
| 3-Heptyl carbitol | 10000 | 51 | 11 | 10 | 6 |
| Methylisobutyl carbitol | 60000 | 85 | 7 | 1.6 | 9 |
| (Phosphoric acid) Tributyl phosphate | 40000 | 56 | 8 | 9 | 10 |
| (Amine) Diamyl amine | 2000 | 68 | 10 | 7 | 9 |

It is clearly noted from Table 6 that the reduced-pressure distillation using a silicone type defoaming agent enabled washings of high load and a high concentration to be treated and regenerated continuously (Example 2: 2.5 hours of retention time) at a high temperature (Example 3: 75 °C) more efficiently. It is further noted that this distillation could handle washings of high pH (Example 4) fully satisfactorily. In Examples 2 to 4, the quality of cleaning was invariably satisfactory.

In the comparative experiments which used defoaming agents other than silicone type defoaming agents, though the cleaning and the treatment performed therein brought about certain effects, the effects of the defoaming agents were lowered in the process of distillation and the efficiencies of treatment were lowered by the entrainment of droplets because the active components in the defoaming agents had high foamability and because the distillation was continued at a high temperature and the washings had a high pH.

Example 8:

First, as the detergent 21, an aqueous type detergent, viz. an aqueous solution containing 20% by weight of a detergent composition of 5 parts by weight of a polyoxyethylene-modified silicone represented by the formula:

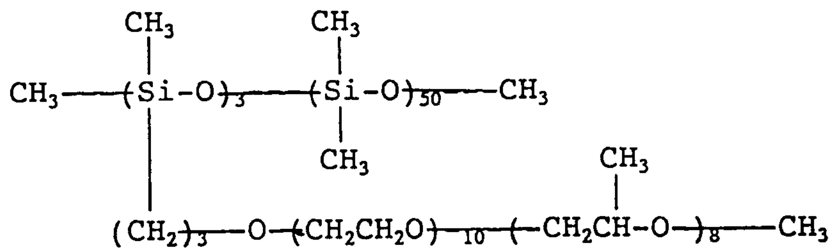

10 parts by weight of stearic acid monoethanol amine, 10 parts by weight of sodium silicate, and 75 parts by weight of water was prepared.

Shadow masks made of Amber were cleaned by following the procedure of Example 2 while using the aqueous type detergent mentioned above and omitting use of a silicone type defoaming agent. After the cleaning was continued for 200 hours under the conditions mentioned above, the washings sampled from the washings storage tank was tested for $COD_1$ and the regenerated rinse samples from the regenerating liquid storage tank was tested for $COD_2$ and the ratio of residual COD was consequently determined. The results are shown in Table 7.

Example 9:

Shadow masks made of amber were cleaned by following the procedure of Example 8 (using an aqueous type detergent of the same composition) while using the same silicone type defoaming agent as in Example 2. After the cleaning was continued for 200 hours under the conditions mentioned above, the ratio of residual COD was determined. The results are shown in Table 7.

Example 10:

First, as the detergent 21, an aqueous type detergent, viz. an aqueous solution containing 20% by weight of a detergent composition of 10 parts by weight of a polyoxyethylene-modified silicone represented by the formula:

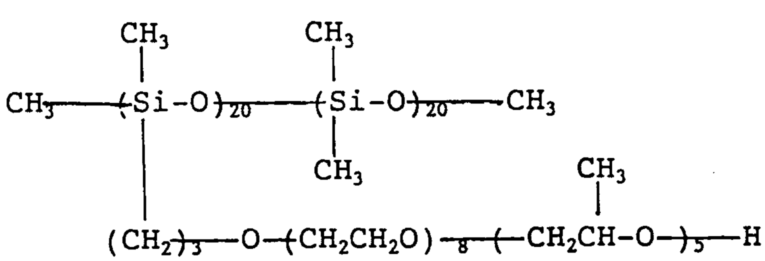

10 parts by weight of sodium myristate, 5 parts by weight of sodium silicate, and 75 parts by weight of city water was prepared.

Die-cast gears were cleaned by following the procedure of Example 3 while using the aqueous detergent mentioned above instead and omitting use of a silicone type defoaming agent. After 500 gears were cleaned under the conditions mentioned above, the ratio of residual COD was determined. The results are shown in Table 7.

Example 11:

First, as the detergent 21, an aqueous detergent, viz. an aqueous solution containing 10% by weight of a detergent composition of 5 parts by weight of a polyoxyethylene-modified silicone represented by the formula:

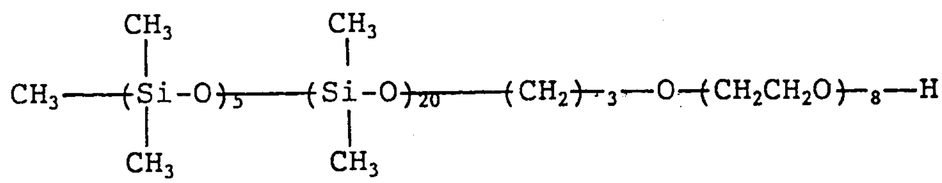

5 parts by weight of sodium myristate, 20 parts by weight of sodium silicate, and 70 parts by weight of city water was prepared.

Lead frames made of 42 alloy were cleaned by following the procedure of Example 4 while using the aqueous type detergent mentioned above instead and omitting use of a silicone type defoaming agent. After 50,000 lead frames weure cleaned under the conditions mentioned above, the ratio of residual COD was determined. The results are shown in Table 7.

Example 13:

Lead frames made of 42 alloy were cleaned by following the procedure of Example 12 (using an aqueous type detergent of the same composition) while using the same silicone type defoaming agent as in Example 4. After 50,000 lead frames were cleaned under the conditions mentioned above, the ratio of residual COD was determined. The results are shown in Table 7.

Table 7

| Defoaming agent | | | Ratio of residual COD (%) | | |
|---|---|---|---|---|---|
| Kind | Amount added (ppm) | Initial degree of defoamation (%) | | | |
| | | | Example 8 | Example 10 | Example 12 |
| (No defoaming agent used) | - | - | 0.8 | 1.9 | 0.8 |
| | | | Example 9 | Example 11 | Example 13 |
| Silicone type defoaming agent A-1 | 200 | 100 | 0.04 | 0.04 | 0.02 |
| Silicone type defoaming agent A-2 | 200 | 97 | 0.1 | 0.8 | 0.7 |
| Silicone type defoaming agent A-3 | 200 | 100 | 0.05 | 0.08 | 0.01 |
| Silicone type defoaming agent A-4 | 200 | 91 | 0.2 | 1.6 | 0.6 |
| Silicone type defoaming agent A-5 | 200 | 98 | 0.3 | 1.9 | 0.1 |

Now, examples of the other method for regeneration of washings according to this invention and examples of the apparatus for regeneration of washings utilizing the method will be described below with reference to the accompanying diagrams.

Fig. 5 is a model diagram illustrating the construction of an apparatus for the regeneration of washings as one example using a method for regeneration of washings according to this invention. An apparatus 101 for the regeneration of washings shown in the diagram is composed mainly of a washings storage tank 110 for temporarily storing washings, a washings heating part 120 for heating and vaporizing washings under a reduced pressure, and a condensing part 130 for condensing the produced vapor and recovering the regenerated liquid.

An effluent raw water supply pipe 111 connected to a cleaning tank and a rinsing tank of a cleaning device omitted from illustration is inserted into and disposed in the washings storage tank 110 and is used for continuously or intermittently supplying washings A to the washings storage tank 110. The washings storage tank 110 is connected to a decompression vessel 121 of the washings heating part 120 through the medium of a washings supply pipe 114 having inserted therein an automatic valve 113 interlocked with a liquid level gauge 112 installed inside the decompression vessel 121.

The washings heating part 120 is provided with the decompression vessel 121 as described above. In the central part of the decompression vessel 121, thin film forming pipes 122 intended as film forming parts are disposed upright. The number of the thin film forming pipes 122 is set in accordance with the amount of the washings to be treated. A heat medium 123 such as, for example, water or silicone oil is disposed around the thin film forming pipes 122 and a heater 124 as a heating mechanism is disposed along the periphery of the decompression vessel 121 so as to encircle the heat medium 123. The thin film forming pipes 122 are heated by the heater 124 through the agency of the heat medium 123.

The thin film forming pipes 122 are provided severally on the upper sides thereof with liquid reservoirs 125 having an upper projecting end. The washings supply pipe 114 mentioned above opens toward the liquid reservoir 125. A liquid B for treatment temporarily stored in the liquid reservoir 125 overflows the liquid reservoir 125 and flows down an inner wall surface 122a of the thin film forming pipe 122 while forming a thin film C on the inner wall surface as illustrated in Fig. 6.
In this while, the liquid B for treatment is heated in the form of a thin film under a reduced pressure and caused to permit vaporization of a component desired to be recovered. The residue D from the vaporization is received in a vaporization residue reservoir 121a in the lower part of the decompression vessel 121. To the vaporization residue reservoir 121a is connected a liquid circulation pipe 127 having a circulation pump 126 inserted therein. The other end part of the liquid circulation pipe 127 opens toward the liquid reservoir 125. As a result, the washings is circulated and continuously heated.

A vapor recovery pipe 131 is connected to the upper part of the decompression vessel 121. A vapor E generated by the heating is forwarded to the condensing part 130 via this vapor recovery pipe 131. A drain pipe 128 is connected to the lower part of the decompression vessel 121.

The thin film C of the liquid B for treatment is formed by causing the liquid B for treatment stored in the liquid reservoir 125 to overflow the liquid reservoir 125 and flow down the inner wall surface 122a of the thin film forming pipe 122 as described above. For the sake of uniformly forming the thin film C on the inner wall surface 122a of the thin film forming pipe 122, the liquid B for treatment in the liquid reservoir 125 is desired to stand still. For this purpose, it is desirable to interpose a shielding plate 129 between the washings supply pipe 114 or the liquid circulation pipe 127 and the thin film forming pipe 122 as illustrated in Fig. 7, for example, and isolate the thin film forming pipe 122 and prevent it from being directly affected by the flow of liquid. It is likewise effective to have the liquid discharge parts 114a and 127a of the washings supply pipe 114 and the liquid circulation pipe 127 positioned below the liquid reservoir 125.

As respects the formation of the thin film C of the liquid B for treatment, an ordinary liquid tends to cohere by the cohesive force of its own and possibly renders difficult the formation of a uniform thin film on the surface of a glass or stainless steel substrate. For the purpose of securing an area for effective vaporization, therefore, the cleaning apparatus requires a large area for heat transfer and inevitably calls for addition to the size of the apparatus. Thus, (a) an idea of forcibly forming a thin film with the aid of a blade or a wiper and (b) an idea of forming a film in an increased thickness and preventing the film from cohesion may be conceived to cope with the difficulty. The method of (a) tends to entail a problem of difficult maintenance of a drive part for the blade or wiper and the method of (b) entails a heavy sacrifice of the advantage of thin-film distillation.

Regarding the problems under discussion, when the relevant liquid has a surface tension of not more than 35 dynes/cm, the cleaning apparatus obviates the necessity of using a forcible means of film formation and enables the desired thin film to be easily formed on the surface of a glass or stainless steel substrate, for example. The washings regenerating apparatus 101 of the present example is adapted to form a thin film of the liquid B for treatment uniformly by utilizing the quality of liquid manifesting a surface tension of not more than 35 dynes/cm. Preferably, he surface tension of the washings is desired to be have a surface tension of not more than 30 dynes/cm. Since the detergent is generally designed to manifest a low surface

tension, it can be effectively subjected to thin-film distillation.

As concrete examples of the liquid which has a surface tension of not more than 35 dynes/cm, aromatic type hydrocarbons such as benzene, toluene, and xylene, linear hydrocarbons such as heptane, hexane, and dodecane, alcohols such as methanol, ethanol, and isopropanol, ketones such as acetone and methylethyl ketone, esters such as methyl acetate and ethyl acetate, ethers such as ethyl ether and dioxane, polyhydric alcohols such as diethylene glycol monobutyl ether and derivatives thereof, terpenes such as d-limonene, d-pinene, and pile oil, silicones, aqueous solutions of fluorine type surfactants, polyorgano-siloxanes, perfluorocarbon type compounds, hydrofluorocarbon type compounds, and compositions containing these compounds may be cited. The aqueous type detergents, quasi aqueous type detergents, and solvent type detergents cited above in the preceding examples are invariably usable. Besides, solvent type rinsing liquids and rinses containing detergent components can be also applicable to the thin-film distillation.

The upper end surface 122b of the thin film forming pipe 122 may be in a flat shape as illustrated in Fig. 9. When this upper end surface 122b of the pipe is flat, it causes the liquid lying thereon to bulge by virtue of the surface tension of the liquid and, depending on the contour of the end surface and the kind of the liquid, possibly prevents the liquid from flowing down uniformly and from forming a thin film smoothly. This drawback may be effectively precluded by imparting a curve to at least part of the upper end surface 122b of the thin film forming pipe 122 as illustrated in Fig. 10. The curve in the upper end surface 122b of the pipe apparently alleviates the surface tension of the liquid and enables the liquid to form the thin film C more uniformly. In this case, the upper end surface of the thin film forming pipe 122 may be so formed that the cross section thereof is wholly curved at a fixed radius of curvature or the top part of the cross section is smooth and flat and the opposite sides of the top part are slanted. Alternatively, notches 122c which are incised in the upper end surface 122b of the thin film forming pipe 122 as illustrated in Fig. 11 offer an effective solution.

The material of which the thin film forming pipe 122 is made is desired to be selected in due consideration of the wettability of the produced pipe with the washings being treated and the thermal conductivity of the material. Basically, the thin film forming pipe 122 fulfills the function thereof so long as the washings under treatment has a surface tension of not more than 35 dynes/cm. This pipe, depending on the material used therefor, possibly manifests unduly low wettability with the washings. The pipe 122 made of the material of this kind fails to form the thin film C with fine quality and compels a sacrifice of the efficiency of vaporization of the liquid. The material for the thin film forming pipe 122, therefore, is desired to exhibit high wettability with the washings and possess thermal conductivity high enough to ensure ample transfer of heat to the washings under treatment. Specifically, a metallic pipe or a ceramic pipe functions ideally in this respect. Incidentally, the shape of the thin film forming pipe 122 does not need to be limited to a cylinder. This pipe 122 is only required to have the inner wall surface thereof so curved as to permit uniform formation of thin film C. The ability of the pipe 122 to form the thin film C is notably affected also by the amount of liquid to be supplied (the amount of liquid to be circulated and the amount of freshly supplied washings). This point will be described specifically hereinafter.

The condensing part 130 is provided with a condensing tank 132 to which the other end part of the vapor recovery pipe 131 is connected. In this condensing tank 132, a cooling coil 134 connected to a chiller 133 is set in place. Further, to the condensing tank 132 is connected a vacuum pump 135 which fulfills the role of reducing the internal pressure of the condensing tank 132 and consequently that of the decompression vessel 121 to a prescribed level. In consequence of the reduction of the internal pressure of the decompression vessel 121, the washings A is fed from the washings storage tank 110 to the decompression vessel 121. The vapor E which is cooled by the cooling coil 134 is condensed and the resultant condensate is received as the regenerated liquid F in the regenerated liquid collection tank 136. To the regenerated liquid collection tank 136 is connected a regenerated liquid supply pipe 138 which has inserted therein a pump 137 adapted to resupply the regenerated liquid F to the cleaning apparatus.

The washings regenerating apparatus 101 allows continuous treatment of the washings even in the absence of a defoaming agent. The use of a defoaming agent, particularly a silicone type defoaming agent, enables the apparatus 101 to treat and regenerate the washings with exalted efficiency.

Now, the method for treating and regenerating the washings A by the use of the washings regenerating apparatus 101 illustrated above will be described below.

First, the vacuum pump 135 is actuated to reduce the internal pressure of the decompression vessel 121 to a prescribed level and, at the same time, effect transfer of the washings A from the washings storage tank 110 to the decompression vessel 121. The decompression vessel 121 fulfills the object thereof so long as the internal pressure thereof is lower than the atmospheric pressure. This internal pressure nevertheless is desired to be reduced to a level in the approximate range of 5 Torrs to 200 Torrs, though variable with

the composition of the washings to be treated. This reduction of the internal pressure allows the component in the washings A intended for recovery to be vaporized at a lower temperature.

The washings A temporarily stored in the liquid reservoir 125 overflows the liquid reservoir 125 and consequently flows down the inner wall surface 122a of the thin film forming pipe 122 and, during this descent, forms the thin film C on the inner wall surface 122a. Since the thin film forming pipe 122 is kept heated at a prescribed temperature by the heater 124, the washings in the form of the thin film C or in the form of a wet wall is heated under the reduced pressure to induce vaporization of the component desired to be recovered. The vapor E which is generated by the heating at a low temperature under the atmospheric pressure is forwarded via the vapor recovery pipe 131 to the condensing part 130. Since the washings regenerating apparatus 101 of the present example is adapted to effect the treatment and regeneration by virtue of the differences in boiling point of the components of the washings including a defiling component as described above, it is important that the degree of reduced pressure and the temperature of heating should be set in due consideration of the boiling points of the component to be recovered and the other components to be removed and such other factors as the amount of liquids to be supplied.

The washings A to be effectively treated and regenerated by this invention may vary, no matter whether the relevant cleaning has adopted an aqueous type detergent or a solvent type detergent. When a solvent type detergent or a solvent type rinse is to be treated, for example, the treatment and regeneration eventually recover the solvent which forms the basic component of the detergent or the rinse. Particularly the rinse can be advantageously regenerated and put to reuse because it is used in a large amount. When the solvent type detergent or rinse is used, the regenerated liquid F of either detergent or rinse is used mainly as the rinse. When an aqueous type detergent is regenerated, water is obtained as the regenerated liquid F.

The washings, as described above, is heated under a reduced pressure while it is flowing down the inner wall surface of the thin film forming pipe 122 in the form of the thin film C. As a result, water and the solvent are vaporized and the other components of the washings are recovered in the vaporization residue reservoir 121a. Since the water and the solvent which have escaped vaporization persist in the vaporization residue D, the vaporization residue D is forwarded again by the circulation pump 126 to the liquid reservoir 125 and treated again as the treating liquid B. Thus, the operations of heating and vaporization are performed continuously on the washings A. When the liquid level in the vaporization residue reservoir 121a is lowered by the repetition of these operations of heating and vaporization, the automatic valve 113 interlocked with the liquid level meter 112 is opened to admit freshly supplied washings A into the decompression vessel 122 (liquid reservoir 125) and consequently enable the operations of heating and vaporization to be continued.

The shape and quantity of the thin film forming pipes 122 and the amount of liquid to be supplied may be adjusted so that the vaporization of the desired components of the washings will be completed by only one descent of the washings along the thin film forming pipes 122. In this case, the circulation pump 126 is no longer required and the vaporization residue D may be discarded in its unaltered form.

The vapor E generated by the heating, namely the vapors of the water and the solvent, is forwarded via the vapor recovery pipe 131 to the condensing tank 132, in which it is cooled and condensed. The resultant condensate is recovered as the regenerated liquid F in the regenerated liquid collection tank 136. The regenerated liquid F is put to reuse as the rinse, for example. The vaporization residue which has been concentrated by the operation of heating is discharged via the drain pipe 128.

Incidentally, for the wet wall type washings regenerating apparatus 101 contemplated in this example, the adjustment of the amount of the washings allowed to overflow the liquid reservoir 125 (the amount of circulation by the circulation pump 126 and the amount of the washings A to be supplied) constitutes an important factor. If the amount of the washings flowing down the thin film forming pipes 122 is unduly large, the formation of the thin film C does not proceed ideally and consequently the efficiency of vaporization or the yield of the recovery of liquid is degraded. Thus, the amount of the washings which flows down the thin film forming pipes 122 must be adjusted in consideration of such factors as the inner wall surface areas of the thin film forming pipes 122, the degree of a reduced pressure, and the temperature of heating.

Fig. 12 shows the results of a test conducted to determine the relation between the amount of a recovered liquid and the duration of treatment as functions of the amount of the liquid supplied. Fig. 12 specifically shows the amount of a recovered liquid (along the course of time) obtained for a given amount of a supplied liquid (amount of circulation) in the operation of the apparatus 101 using 3,000 ml of a mixture of a silicone type solvent (produced by Kabushiki Kaisha Toshiba and marketed under trademark designation of "Technocare W1") with an alcohol (W1 = 70% by weight + alcohol - 30% by weight) as a treating liquid (model washings) under the conditions of a reduced pressure of 20 Torrs and a temperature of 80 °C. The thin film forming pipes 122 were cylinders made of stainless steel and measuring 30 mm in inside

diameter, 2 mm in wall thickness, and 600 mm in length. It is clearly noted from Table 12 that the amount of recovered liquid decreased when the amount of supplied liquid was unduly large. It is, therefore, important to optimize the treatment by controlling the thickness of the thin film C (the thickness of the wet wall).

As is clearly noted from the results of the operation of the apparatus using two thin wall forming pipes as illustrated in Fig. 12, an increase in the amount of a supplied liquid can be coped with by increasing the number of the thin film forming pipes 122. This remark implies that efficient treatment of a large amount of the washings is attained by simply increasing the number of the thin film forming pipes 122 without requiring any addition to the dimensions of the apparatus itself. In the case of the tank type distillation used in the preceding example, the amount of a treated liquid depends largely on the capacity of the tank (the inner surface area). For the sake of increasing the amount of the treated liquid (the amount of a recovered liquid), it is necessary to increase the capacity of the tank (the inner surface area) and, at the same time, increase the amount of heat to be exerted.

Fig. 13 compares the amount of a recovered liquid by the wet wall distillation with the amount of a recovered liquid by the tank type distillation. The wet wall distillation was performed in the same manner as in the test described above. In the tank type distillation, the inner surface area of the tank was equalized with the inner wall surface area of the thin film forming pipes 122 and the operation of distillation was carried out under the same conditions as in the wet wall distillation. The results of comparison of the wet wall type reduced-pressure distillation with the ordinary reduced-pressure distillation and the normal-pressure distillation are shown in Table 8.

Table 8

| | Wet wall type reduced-pressure distillation (Thin film forming pipe: SUS) | Ordinary reduced-pressure distillation | Ordinary normal pressure distillation |
|---|---|---|---|
| Amount treated (Amount of liquid supplied) | 3 kg (1 liter / hr) | | |
| Composition of treated liquid | FRW-1/Alcohol (70/30) | | |
| Degree of vacuum | 20 Torrs | | —— |
| (Heating temperature) | | | |
| Heater part | 100°C | 100°C | 200°C |
| Liquid part | 80°C | 80°C | 180°C |
| Amount recovered (Ratio) | 1890g (90%) | 1790g (85%) | 1680g (80%) |

* Capacity of heater: 200 V x 1.5 Kw

It is clearly noted from Fig. 13 and Table 8 that the wet wall type distillation permits highly efficient recovery of the regenerated liquid. This distillation is easily enabled to increase the amount of a treated liquid by simply increasing the number of pipes. This remark is equivalent to a statement that the wet wall type distillation provides generous reduction in size and conspicuous exaltation of efficiency for the washings regenerating apparatus.

Fig. 14 shows the relation between the shape of upper end surface of the thin film forming pipes and the amount of a recovered liquid. In the test which produced the data of Fig. 14, the same model washings as in the preceding test was supplied at a rate of 1 liter/hour and heated under a reduced pressure of 20 Torrs at a temperature of 80 °C and thin wall forming pipes measuring 9.5 mm in inside diameter, 1.5 mm in wall thickness, and 400 mm in length were used. It is clearly noted from Fig. 14 that thin film forming pipes having a curved upper end surface or containing notches in the upper end surface contribute to the exaltation of the efficiency of treatment.

The results of a test conducted to determine the effect of the material used for the thin film forming pipes on the efficiency of treatment are shown in Table 9. The conditions used in the test were similar to those of the test which produced the results of Table 8.

Table 9

| Thin film forming pipe | Material | Glass | Ceramic ($Si_3N_4$) | SUS | Iron |
|---|---|---|---|---|---|
| | Shape | Inside diameter = 30 mm | | | |
| | | Wall thickness = 2 mm | | | |
| | | Length = 600 mm | | | |
| Amount treated (Amount of liquid circulated) | | 3 kg (1 liter/hr) | | | |
| Composition of treating liquid | | FRW-1/Alcohol (70/30) | | | |
| Degree of vacuum | | 20 Torrs | | | |
| Heating temperature (Liquid part) | | 80 ° C | | | |
| Amount recovered | | 1870g | 1860g | 1890g | 1875g |
| (Ratio of recovery) | | (89%) | (88%) | (90%) | (85%) |
| Purity of FRW-1 | | >98% | | | |

* Capacity of heater: 200 V x 1.5 Kw, duration of treatment: about 4 hours.

It is clearly noted from Table 9 that the material of the thin film forming pipes had no appreciable effect on the ratio of recovery or the purity of a recovered liquid. This fact indicates that the material allows variation. Pipes made of iron, when employed in an apparatus using water as a heat medium or as the liquid for treatment, have the possibility of rusting. In the apparatus of this kind, therefore, it is desirable to use pipes made of some other material.

In the washings regenerating apparatus 101 of this example, since the thin film C is formed by causing the washings A (or the treating liquid B) to flow down the walls of the thin film forming pipes 122 as described above, the inner wall surfaces 122a of the thin film forming pipes 122 are wholly allowed to function as heat transfer surfaces. Further, the heat transfer surfaces can be easily increased proportionately to the amount of a treated liquid by increasing the number of thin film forming pipes 122 to be installed in the apparatus. Thus, the apparatus can be miniaturized without a sacrifice in the amount of a treated liquid or the efficiency of treatment. Further, since the thin film forming pipes 122 are utilized for the formation of the thin film C of the washings A, the apparatus allows the washings A in a large volume to be easily and continuously treated. Since the apparatus is adapted to heat the washings A in the form of a thin film under a reduced pressure, it enables even the washings of high load to be distilled (regenerated) at a low temperature with high efficiency and accuracy without requiring dilution of the washings.

The embodiments described thus far represent cases of using pipes as thin film forming parts. This invention is not limited to these cases. The thin film forming parts may be in various shapes on the condition that they should be capable of forming a thin film of the washings by causing the washings to flow down the surfaces thereof and capable of heating the thin film forming surfaces thereof. For example, the outer surfaces of circular pipes and cylinders may be used as thin film forming surfaces. In this case, the circular pipes or the cylinders may be provided in the upper parts of their thin film forming parts with nozzles which are capable of allowing the washings to flow down the thin film forming parts. The circular pipes or the cylinders may be provided halfway in the entire height thereof with a flange which serves the purpose of increasing the surface area of contact with the washings. Further, thin film forming parts of the shape of a plate, thin film forming parts of the shape of a corrugated plate, and other thin film forming parts of other similar shapes can be used herein.

The washings regenerating apparatus 101 described above can be used for treating the washings from a cleaning apparatus in a batchwise pattern. Further, it can be incorporated in such a cleaning apparatus 1 as illustrated in Fig. 1 for the purpose of continuously treating the washings discharged from the rinsing means 30 of the cleaning apparatus 1 and, at the same time, continuously recycling the regenerated rinse. When the washings regenerating apparatus 101 mentioned above is utilized in the cleaning apparatus 1 such as is illustrated in Fig. 1, it can be used in the place of the washings regenerating means 40 illustrated in Fig. 1.

Now, a concrete example of cleaning carried out by the use of the cleaning apparatus 1 which incorporated therein the washings regenerating apparatus 101 and the results of the evaluation of the operation will be described below.

Example 14:

Die-cast gears were cleaned by following the procedure of Example 3 while using a cleaning apparatus (using two rinsing tanks) which incorporated therein the washings regenerating apparatus 101 adapted to effect the wet wall type reduced-pressure distillation. A detergent of the same composition as in Example 3 and a defoaming agent of the same composition were used in the cleaning. The wet wall type reduced-pressure distillation was carried out under the conditions of a rate of treatment of 15 liters/hour and a degree of reduced pressure of 140 Torrs and a heating temperature of 50 °C. In a test run which omitted use of a silicone type defoaming agent, the cleaning and the treatment of washings were similarly carried out.

After 500 gears were cleaned under the conditions described above, the washings sampled from the washings reservoir 110 was tested for $COD_1$ and the regenerated rinse sampled from the regenerated liquid collection tank 136 was tested for $COD_2$ and the ratio of residual COD [$COD_2/COD_1$ x 100 (%)] was determined. The results are shown in Table 10.

Table 10

| Defoaming agent | | | Example 14 |
|---|---|---|---|
| Kind | Amount added (ppm) | Degree of initial deformation (%) | Ratio of residual COD (%) |
| Silicone type defoaming agent A-1 | 200 | 100 | 0.04 |
| ″ A-2 | 200 | 96 | 0.7 |
| ″ A-3 | 200 | 100 | 0.08 |
| ″ A-4 | 2000 | 88 | 1.9 |
| ″ A-5 | 2000 | 98 | 3.8 |
| (No defoaming agent used) | ——— | ——— | 5.0 |

It is clearly noted from Table 10 that since the wet wall type distillation has a high heating effect as compared with the tank type distillation of the same scale, it offered sufficient distillation notwithstanding the heating temperature was as low as 50 °C. It is also confirmed that the treatment of distillation was attained at high accuracy notwithstanding the rate of treatment was as high as 15 liters/hour. These advantages are evident when the results indicated above are compared with the results of Example 3 (rate of treatment: 5 liters/hour, degree of reduced pressure: 150 Torrs, heating temperature: 75 °C) shown in Table 6. Thus, the wet wall type distillation proceeds so quickly as to permit an increase in the rate of treatment and a decrease in the heating temperature. As a result, the degree of cleanliness of the rinse can be further heightened and, at the same time, the load exerted on the silicone type defoaming agent can be alleviated.

## Industrial Applicability

The method for the regeneration of washings in accordance with this invention allows washings of high load containing a detergent component to be directly and continuously regenerated efficiently at a low cost without requiring dilution. Further, the method for cleaning and the apparatus for cleaning according to this invention can lower the amount of a rinse to be supplied by circulation and meantime maintain the degree of cleanliness of the rinse. When they are used together with the method for regeneration of the washings mentioned above, they permit efficient use of the rinse. Thus, when an aqueous type detergent or a solvent type detergent is used in the place of a Flon type detergent or a chlorine type detergent, the cleaning of high accuracy can be realized at a low cost.

## Claims

1. A method for the regeneration of washings discharged from at least either a cleaning step for removing with a detergent a defiling component adhering to an object under treatment or a rinsing step for removing with a rinse a detergent component adhering to the object, which method is characterized by subjecting the washings to reduced-pressure distillation and, at the same time, circulating the resultant condensate to the rinsing step.

2. A method according to claim 1, wherein the washings subjected to the reduced-pressure distillation incorporates a silicone type defoaming agent therein prior to the distillation.

3. A method according to claim 2, wherein the silicone type defoaming agent contains at least a polyorganosiloxane represented by the general formula:

$R^1{}_nSiO_{(4-n)/2}$

(wherein $R^1$'s independently stand for a monovalent group selected from the class consisting of substituted or unsubstituted monovalent hydrocarbon groups having one to 10 carbon atoms and polyoxyalkylene groups and n stands for a numerical value the average of which is in the range of 1.9 to 2.2).

4. A method according to claim 3, wherein the silicone type defoaming agent contains at least a polyorganosiloxane represented by the general formula:

$R^9{}_nSiO_{(4-n)/2}$

(wherein $R^9$'s independently stand for a substituted or unsubstituted monovalent hydrocarbon group having one to ten carbon atoms and n stands for a numerical value the average of which is in the range of 1.9 to 2.2) and an inorganic filler.

5. A method according to claim 3 or claim 4, wherein the silicone type defoaming agent contains a polyoxyalkylene group-containing polyorganosiloxane having at least one siloxane unit represented by the general formula:

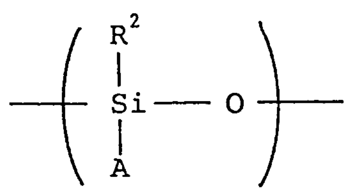

(wherein $R^2$ stands for an alkyl group or an aryl group and A for a polyoxyalkylene group) in the molecule thereof.

6. A method according to claim 1, wherein at least either the detergent or the rinse contains a silicone type defoaming agent.

7. A method according to claim 6, wherein at least either the detergent or the rinse contains a polyorganosiloxane represented by the general formula:

$R^1{}_nSiO_{(4-n)/2}$

(wherein $R^1$'s independently stand for a monovalent group selected from the class consisting of substituted or unsubstituted monovalent hydrocarbon groups having one to 10 carbon atoms and polyoxyalkylene groups and n stands for a numerical value the average of which is in the range of 1.9 to 2.2) as the silicone type defoaming component.

8. A method for the regeneration of washings discharged from at least either a cleaning step for removing with a detergent a defiling component adhering to an object under treatment or a rinsing step for removing with a rinse a detergent adhering to the object, which method is characterized by causing the washings to flow down a heated wall surface and form a thin film of the washings and meanwhile distilling the thin film under a reduced pressure thereby effecting regeneration of the washings.

9. A method according to claim 8, wherein the washings has a surface tension of not more than 35 dynes/cm.

10. An apparatus for the regeneration of washings characterized by comprising a reduced-pressure vessel provided with a thin film forming part, a liquid reservoir for introducing at least washings, a mechanism for causing washings which overflows the reservoir and flows down the wall surface of the thin film forming part while forming a thin film to be heated and vaporized under a reduced pressure, and a mechanism for cooling the product of the vaporization and recovering the resultant condensate as a regenerated liquid.

11. An apparatus according to claim 10, wherein a vaporizing residue reservoir for recovering the residue of distillation is disposed below the thin film forming part and the heating and the vaporization of washings are carried out by causing the vaporization residue to be supplied again to the reservoir.

12. A method for the cleaning comprising a cleaning step for removing a defiling component adhering to an object under treatment by the use of a cleaning tank containing a detergent and a rinsing step for removing a detergent component adhering to the object by the use of a series of sequentially connected rinsing tanks containing a rinse so that the rinse is forwarded sequentially therethrough in a direction opposite to the direction of conveyance of the object, which method is characterized by subjecting the washings discharged from the last of the series of sequentially connected rinsing tanks in the direction of the flow of the rinse to reduced-pressure distillation and circulating the resultant condensate to the first of the series of sequentially connected rinsing tanks in the direction of the flow of the rinse and meanwhile effecting the rinsing step.

13. A method according to claim 12, wherein the washings subjected to the reduced-pressure distillation incorporates a silicone type defoaming agent therein prior to the distillation.

14. A method according to claim 12, wherein at least either the detergent or the rinse contains a silicone type defoaming agent.

15. A method according to claim 12, wherein the reduced-pressure distillation is carried out by causing the washings to flow down the wall surface kept in a heated state and form a thin film on the hot wall surface.

16. A method according to claim 15, wherein the washings has a surface tension of not more than 35 dynes/cm.

17. An apparatus for the cleaning characterized by comprising cleaning means provided with a cleaning tank containing a detergent and adapted to remove a defiling component adhering to an object under treatment with the detergent, rinsing means provided with a series of sequentially connected rinsing tanks containing a rinse so as to advance the rinse therethrough in a direction opposite to the direction of conveyance of the object and adapted to remove the detergent component adhering to the object with the rinse, rinsing regenerating means provided with a reduced-pressure heating mechanism for at least introducing the washings discharged from the last of the series of sequentially connected ringing tanks in the direction of the flow of the rinse and heating and vaporizing the washings under a reduced pressure and a condensing mechanism for condensing the vapor produced by the reduced-pressure heating mechanism, and a circulating system for supplying the condensate obtained by the condensing mechanism to the first of the series of sequentially connected rinsing tanks in the direction of the flow of the rinse.

18. An apparatus according to claim 17, which further comprises defoaming agent supply means for supplying so the washings a silicone type defoaming agent capable of curbing effervescence in the

reduced-pressure heating mechanism.

**19.** An apparatus according to claim 17, wherein at least either the detergent or the rinse contains a silicone type defoaming agent.

**20.** An apparatus according to claim 17, wherein the reduced-pressure heating mechanism is provided with a decompression vessel incorporating therein a thin film forming part, a liquid reservoir for introducing at least washings, and a heating mechanism for heating and vaporizing under a reduced pressure the washings flowing down from the liquid reservoir along the wall surface of the thin film forming part while forming a thin film on the wall surface.

Fig. 1

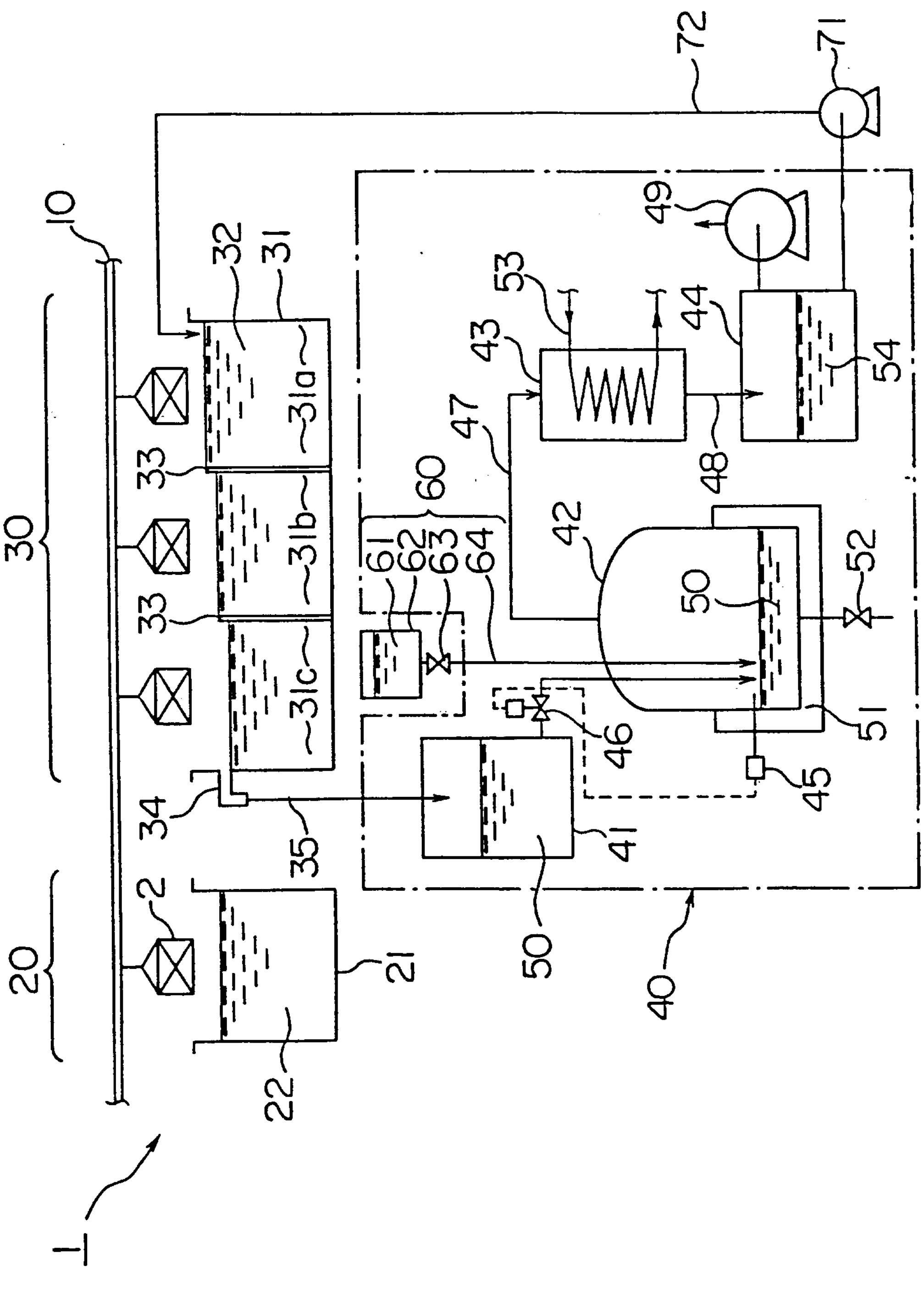
1
2
10
20
21
22
30
31
31a
31b
31c
32
33
34
35
40
41
42
43
44
45
46
47
48
49
50
51
52
53
54
60
61
62
63
64
71
72

Fig. 2

(Capacity of rinsing tank: 42 liters)

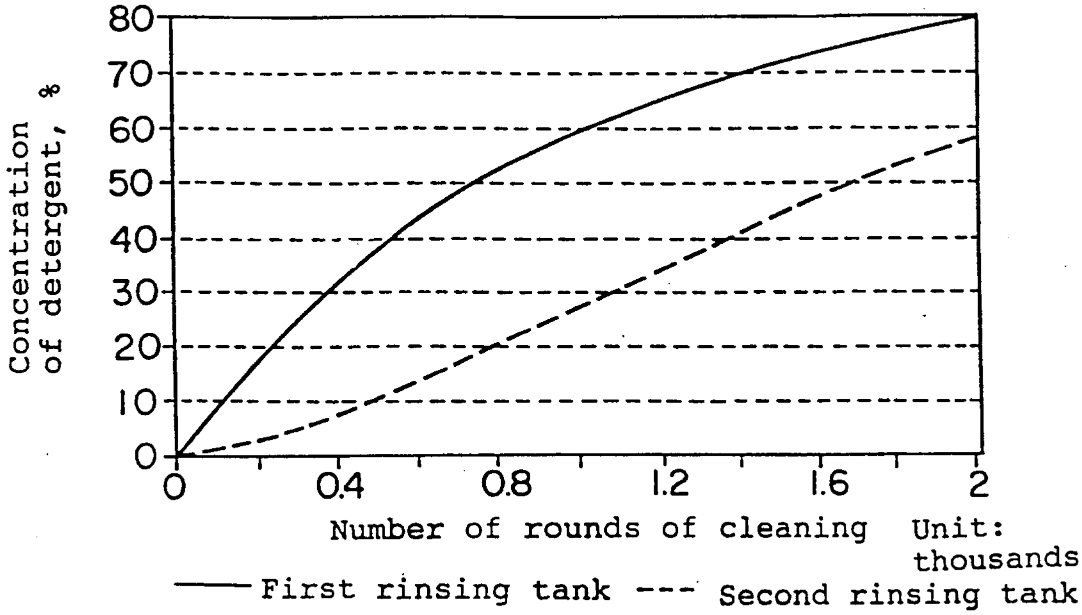


(a)

(Capacity of rinsing tank: 90 liters)

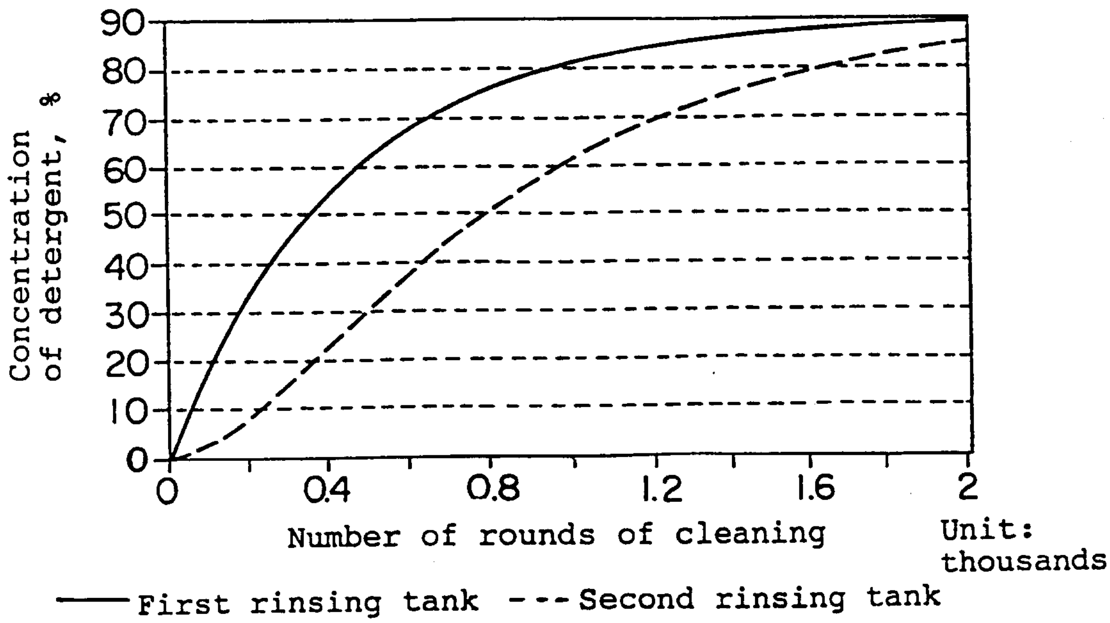


(b)

Fig. 3

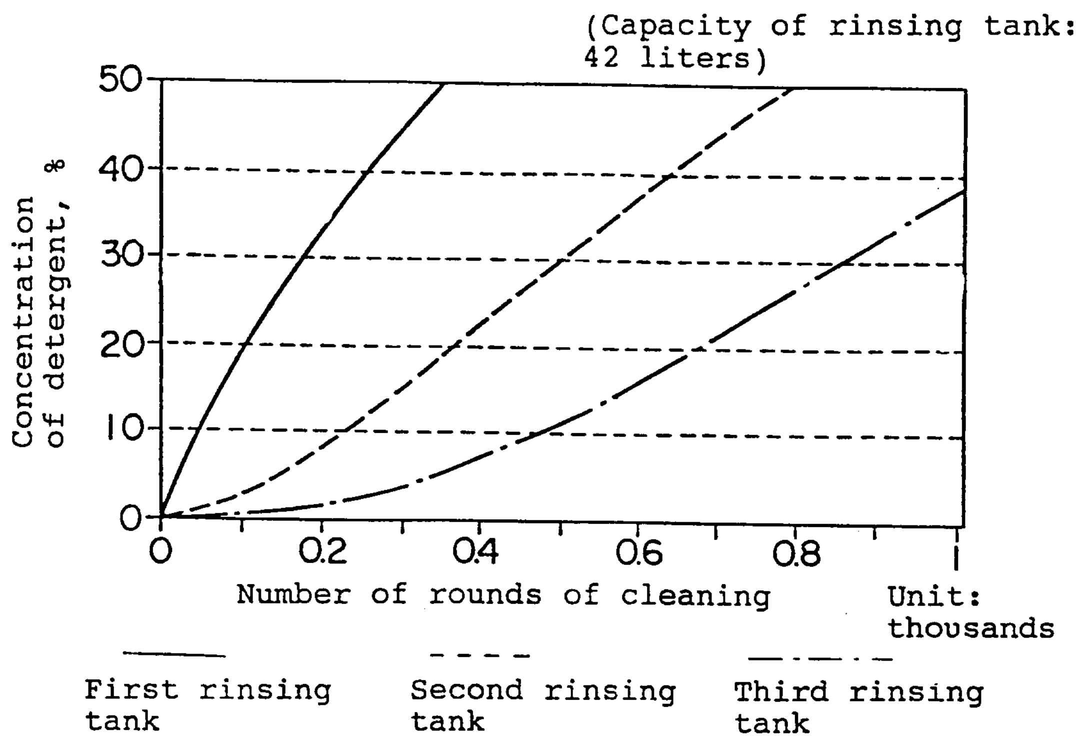
(Capacity of rinsing tank: 42 liters)
50
40
30
20
10
0
Concentration of detergent, %
0
0.2
0.4
0.6
0.8
1
Number of rounds of cleaning
Unit: thousands
First rinsing tank
Second rinsing tank
Third rinsing tank

(a)

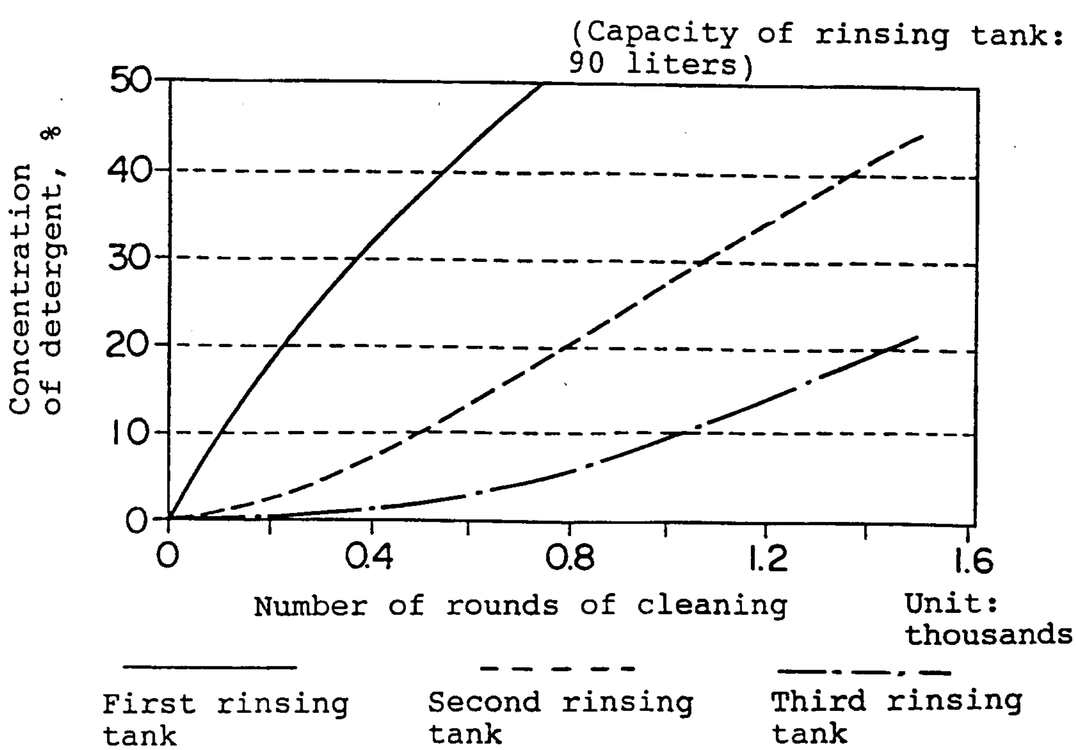
(Capacity of rinsing tank: 90 liters)
50
40
30
20
10
0
Concentration of detergent, %
0
0.4
0.8
1.2
1.6
Number of rounds of cleaning
Unit: thousands
First rinsing tank
Second rinsing tank
Third rinsing tank

(b)

Fig. 4

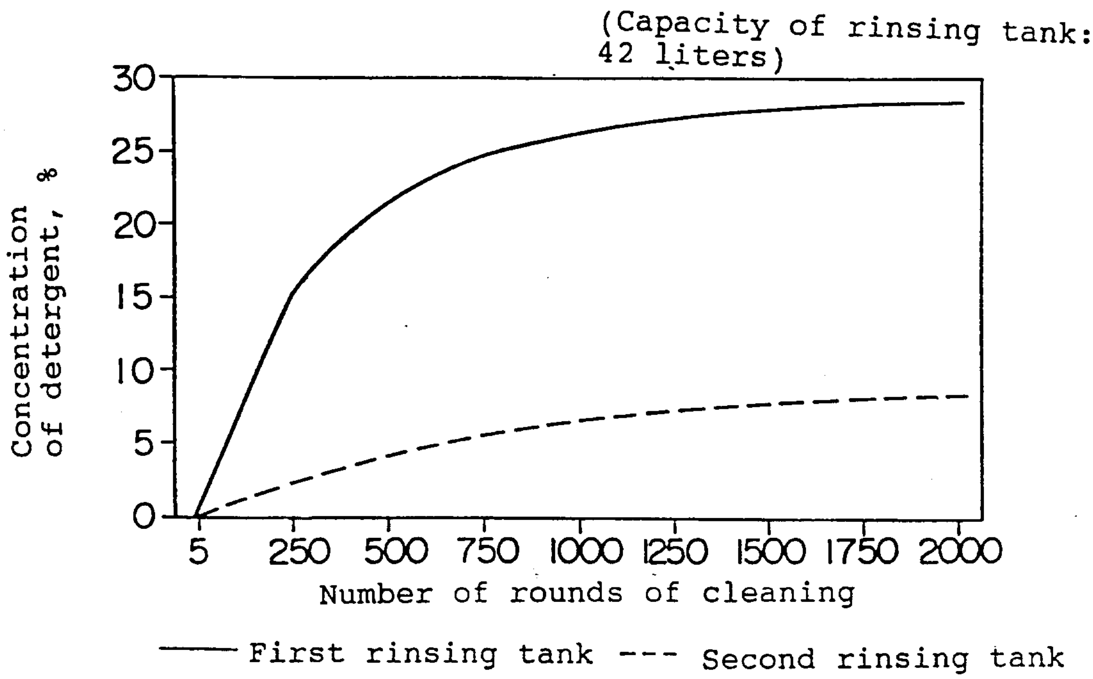
(Capacity of rinsing tank:
42 liters)
Concentration of detergent, %
30
25
20
15
10
5
0
5
250
500
750
1000
1250
1500
1750
2000
Number of rounds of cleaning
First rinsing tank
Second rinsing tank

(a)

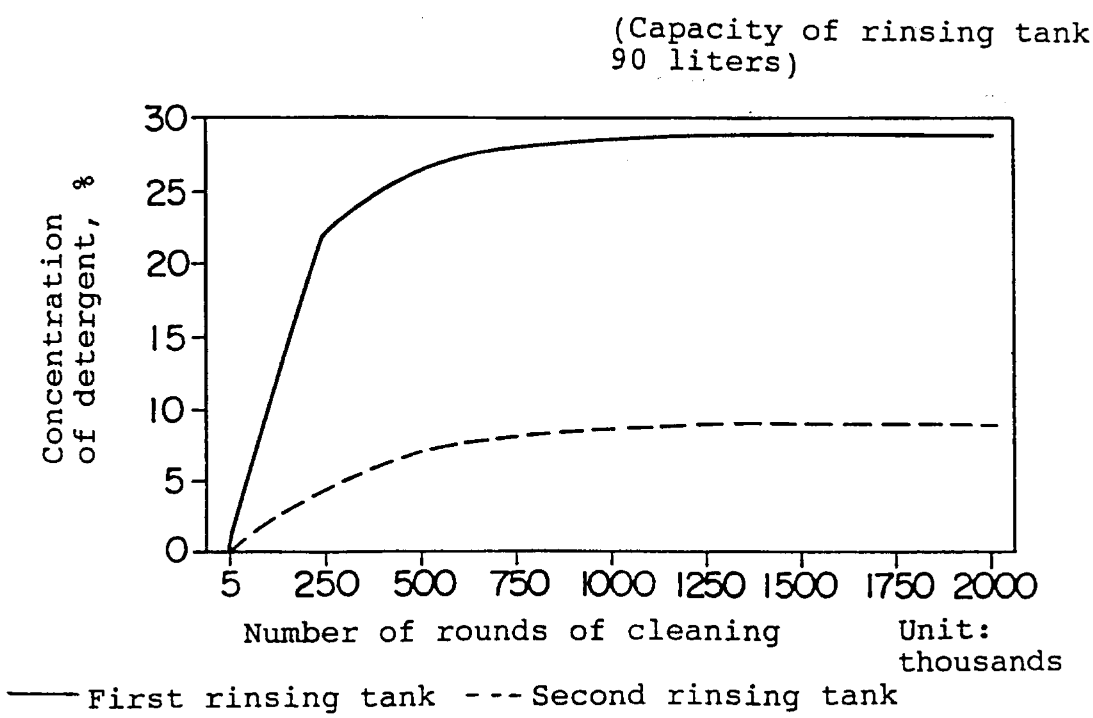
(Capacity of rinsing tank:
90 liters)
Concentration of detergent, %
30
25
20
15
10
5
0
5
250
500
750
1000
1250
1500
1750
2000
Number of rounds of cleaning
Unit: thousands
First rinsing tank
Second rinsing tank

(b)

Fig. 5

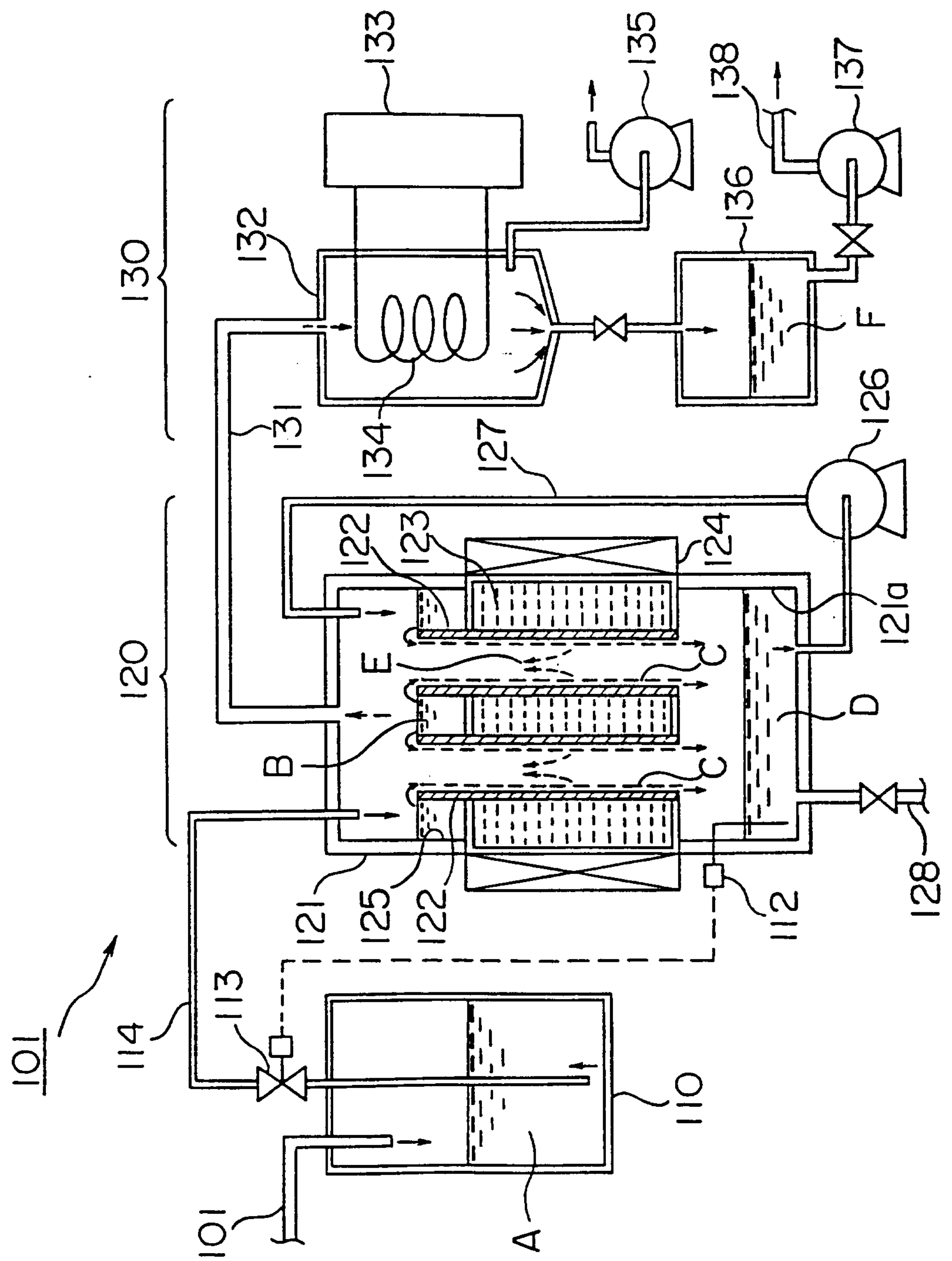

101
101
110
A
113
114
112
121
125
122
122
121a
120
B
C
C
D
E
123
124
126
127
128
130
131
132
133
134
135
136
137
138
F

Fig. 6

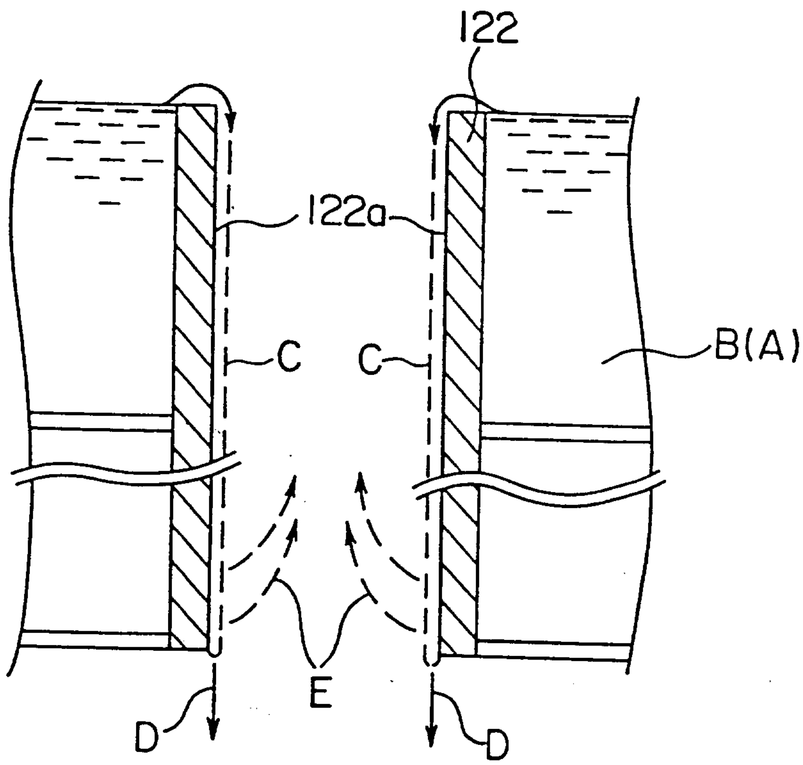

Fig. 7

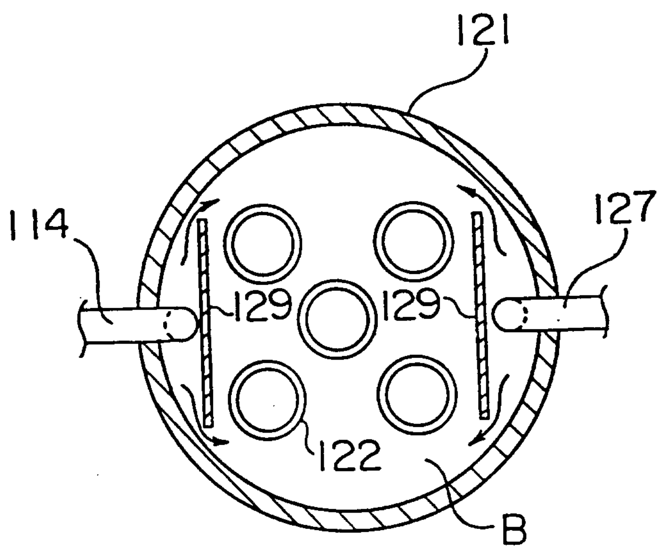


Fig. 8

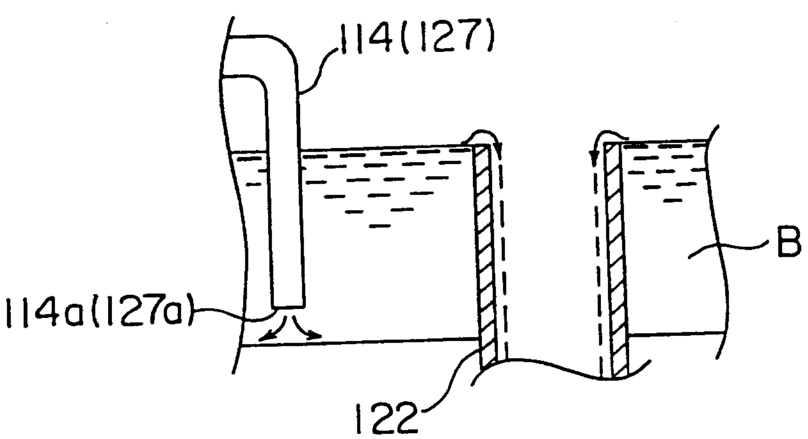

Fig. 9

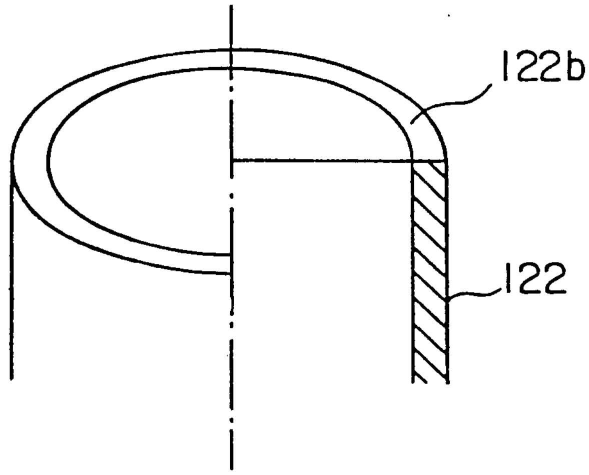


Fig. 10

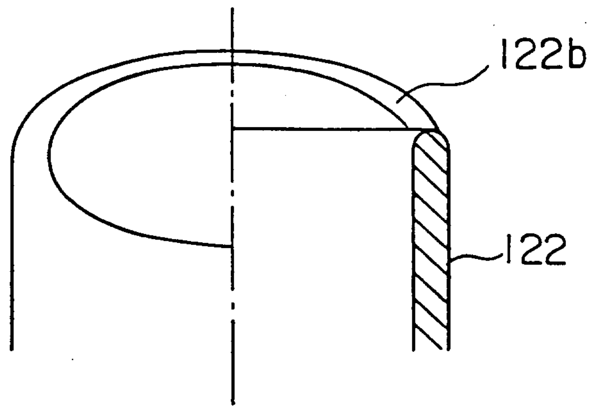


Fig. 11

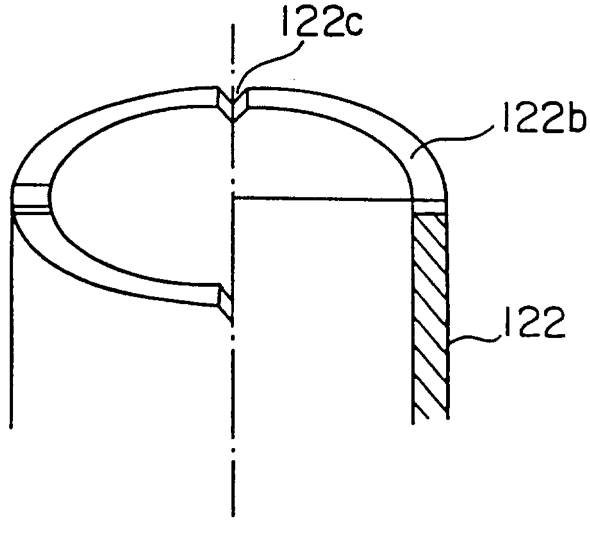


8 / 11

Fig. 12

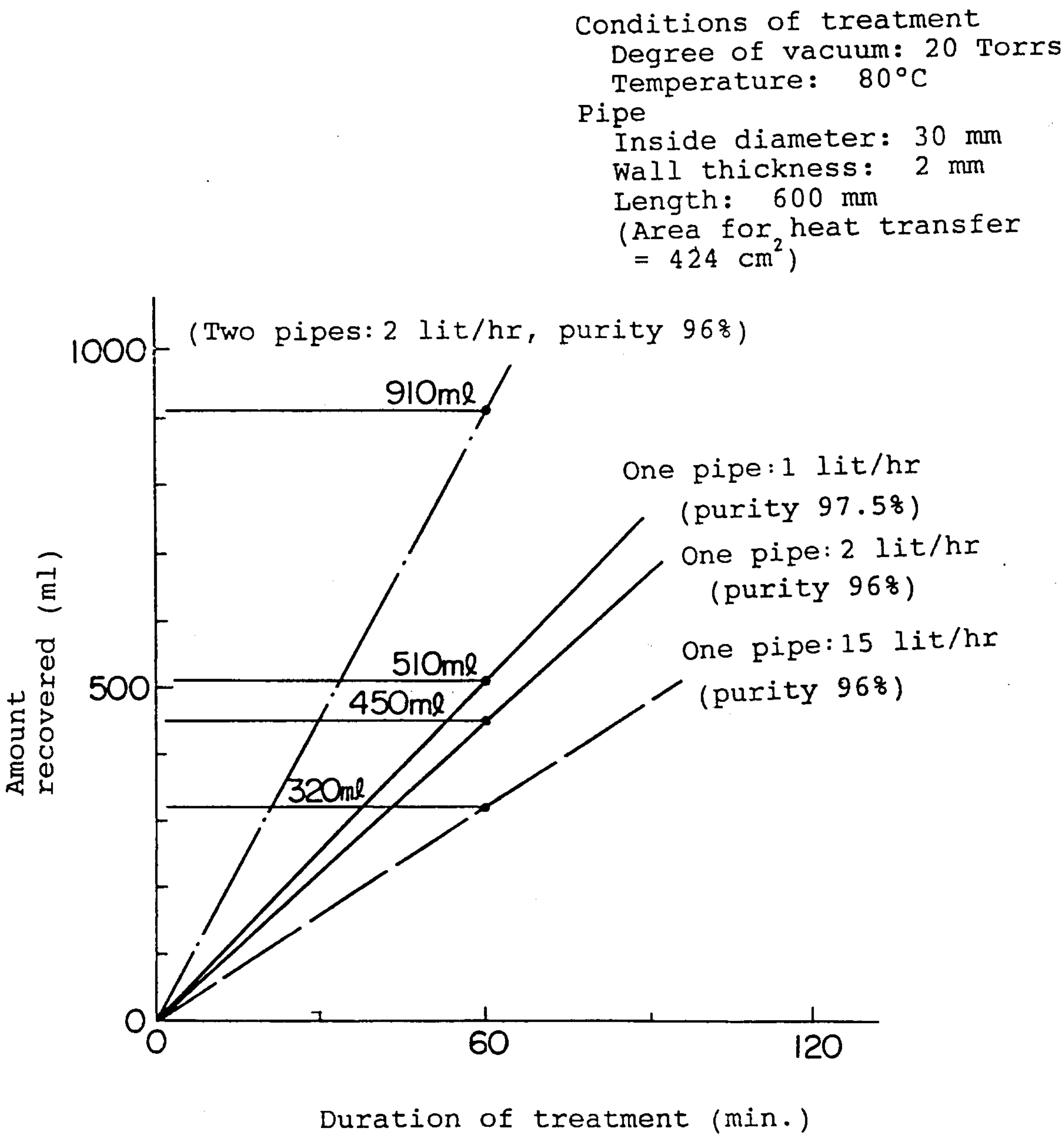
Conditions of treatment
Degree of vacuum: 20 Torrs
Temperature: 80°C
Pipe
Inside diameter: 30 mm
Wall thickness: 2 mm
Length: 600 mm
(Area for heat transfer = 424 cm²)
(Two pipes: 2 lit/hr, purity 96%)
910mℓ
One pipe: 1 lit/hr
(purity 97.5%)
One pipe: 2 lit/hr
(purity 96%)
One pipe: 15 lit/hr
(purity 96%)
510mℓ
450mℓ
320mℓ
1000
500
0
0
60
120
Amount recovered (ml)
Duration of treatment (min.)

Fig. 13

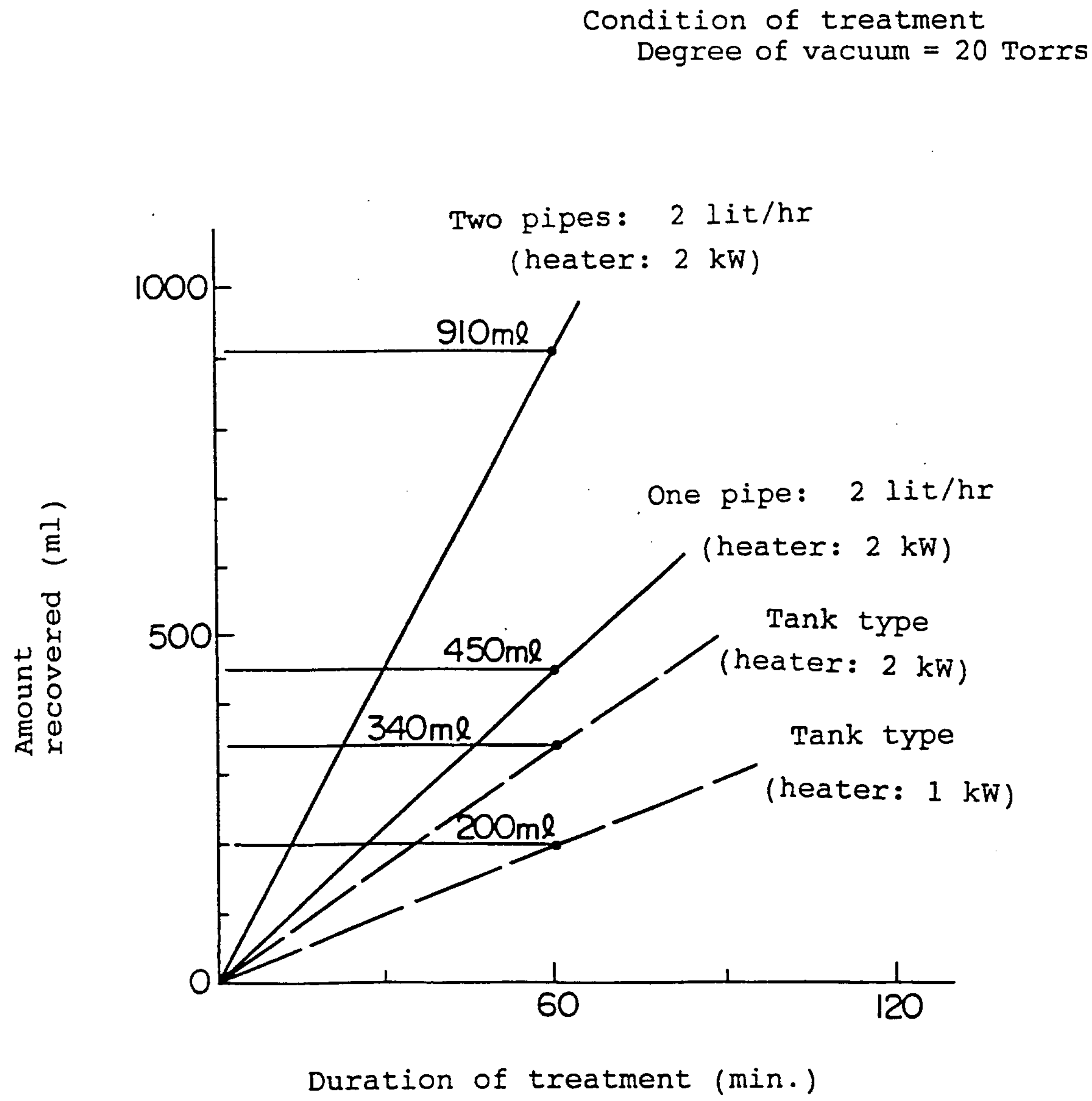
Condition of treatment
Degree of vacuum = 20 Torrs
Two pipes: 2 lit/hr
(heater: 2 kW)
One pipe: 2 lit/hr
(heater: 2 kW)
Tank type
(heater: 2 kW)
Tank type
(heater: 1 kW)
910mℓ
450mℓ
340mℓ
200mℓ
1000
500
0
60
120
Amount recovered (ml)
Duration of treatment (min.)

Fig. 14

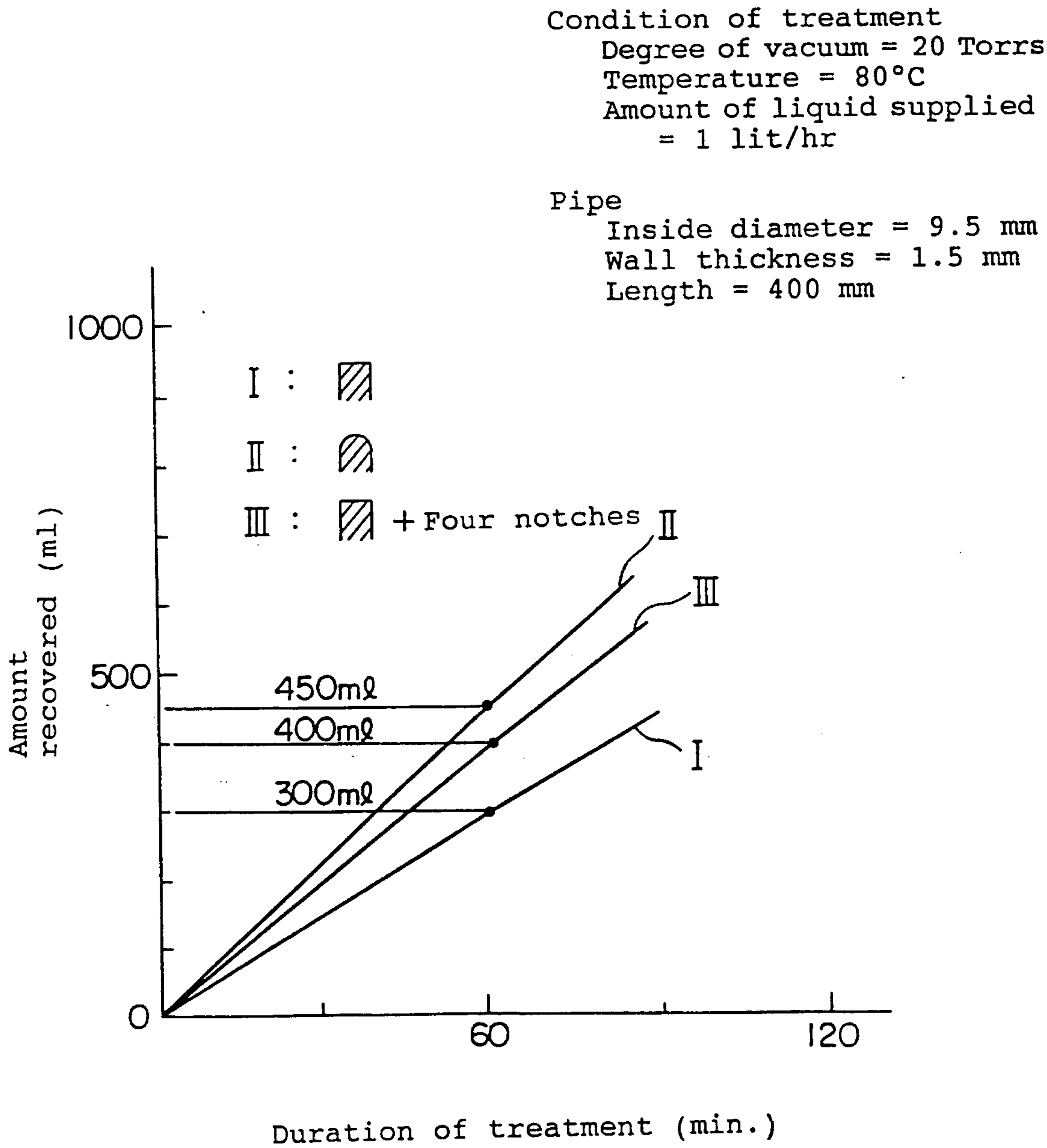
Condition of treatment
Degree of vacuum = 20 Torrs
Temperature = 80°C
Amount of liquid supplied
= 1 lit/hr
Pipe
Inside diameter = 9.5 mm
Wall thickness = 1.5 mm
Length = 400 mm
1000
500
0
I :
II :
III : + Four notches
450mℓ
400mℓ
300mℓ
II
III
I
60
120
Amount recovered (ml)
Duration of treatment (min.)

**INTERNATIONAL SEARCH REPORT**

International application No. PCT/JP92/01390

**A. CLASSIFICATION OF SUBJECT MATTER**

Int. Cl$^5$ C11D11/04, B08B3/14, B01D3/34

According to International Patent Classification (IPC) or to both national classification and IPC

**B. FIELDS SEARCHED**

Minimum documentation searched (classification system followed by classification symbols)

Int. Cl$^5$ C11D11/00-11/04, B08B3/00-3/14, B08B13/00, B01D3/00-3/42

Documentation searched other than minimum documentation to the extent that such documents are included in the fields searched

Electronic data base consulted during the international search (name of data base and, where practicable, search terms used)

WPI, WPI/L

**C. DOCUMENTS CONSIDERED TO BE RELEVANT**

| Category* | Citation of document, with indication, where appropriate, of the relevant passages | Relevant to claim No. |
|---|---|---|
| A | JP, A, 3-242205 (Daikin Industries, Ltd.), October 29, 1991 (29. 10. 91), (Family: none) | 1-20 |

☐ Further documents are listed in the continuation of Box C. ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| January 5, 1993 (05. 01. 93) | February 2, 1993 (02. 02. 93) |
| Name and mailing address of the ISA/ Japanese Patent Office | Authorized officer |
| Facsimile No. | Telephone No. |

Form PCT/ISA/210 (second sheet) (July 1992)